(19) **Europäisches Patentamt / European Patent Office / Office européen des brevets**

(11) **EP 4 180 991 A1**

(12) # EUROPEAN PATENT APPLICATION
published in accordance with Art. 153(4) EPC

(43) Date of publication:
**17.05.2023 Bulletin 2023/20**

(21) Application number: **20945809.0**

(22) Date of filing: **24.07.2020**

(51) International Patent Classification (IPC):
**G06F 16/9535** (2019.01) **G06N 3/04** (2023.01)

(52) Cooperative Patent Classification (CPC):
**G06F 16/9535; G06N 3/04**

(86) International application number:
**PCT/CN2020/104653**

(87) International publication number:
**WO 2022/016556 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **CHENG, Pengxiang**
  **Shenzhen, Guangdong 518129 (CN)**
- **DONG, Zhenhua**
  **Shenzhen, Guangdong 518129 (CN)**
- **HE, Xiuqiang**
  **Shenzhen, Guangdong 518129 (CN)**
- **ZHANG, Xiaolian**
  **Shenzhen, Guangdong 518129 (CN)**
- **YIN, Shi**
  **Shenzhen, Guangdong 518129 (CN)**
- **HU, Yuelin**
  **Shenzhen, Guangdong 518129 (CN)**

(74) Representative: **Isarpatent**
**Patent- und Rechtsanwälte Barth Charles Hassa Peckmann & Partner mbB Friedrichstrasse 31 80801 München (DE)**

(54) **NEURAL NETWORK DISTILLATION METHOD AND APPARATUS**

(57)     This application provides a neural network distillation method and apparatus in the field of artificial intelligence, to provide a neural network with a lower output bias, thereby improving output accuracy of the neural network. In addition, a proper distillation manner can be selected based on different scenarios, so that a generalization capability is strong. The method includes: obtaining a sample set, where the sample set includes a biased data set and an unbiased data set, the biased data set includes biased samples, and the unbiased data set includes unbiased samples; determining a first distillation manner based on data features of the sample set, where in the first distillation manner, a teacher model is trained by using the unbiased data set, and a student model is trained by using the biased data set; and training a first neural network based on the biased data set and the unbiased data set in the first distillation manner, to obtain an updated first neural network.

```
┌─────────────────────────────────────────────────────────────┐
│ Obtain a sample set, where the sample set includes a biased  │──601
│ data set and an unbiased data set                            │
└─────────────────────────────────────────────────────────────┘
                            │
                            ▼
┌─────────────────────────────────────────────────────────────┐
│ Determine a first distillation manner based on data features │──602
│ of the sample set                                            │
└─────────────────────────────────────────────────────────────┘
                            │
                            ▼
┌─────────────────────────────────────────────────────────────┐
│ Train a first neural network based on the biased data set    │──603
│ and the unbiased data set in the first distillation manner,  │
│ to obtain an updated first neural network                    │
└─────────────────────────────────────────────────────────────┘
```

FIG. 6

**Description**

**TECHNICAL FIELD**

This application relates to the field of artificial intelligence, and in particular, to a neural network distillation method and apparatus.

**BACKGROUND**

Knowledge distillation is a model compression technology for distilling feature representation "knowledge" learned by a complex network with a strong learning capability and transferring it to a network with a small quantity of parameters and a weak learning capability. Through knowledge distillation, knowledge can be transferred from one network to another, and the two networks may be homogeneous or heterogeneous. The practice is to train a teacher network first, and then use outputs of the teacher network to train a student network.

However, a training set for training the student network may have a bias, which easily leads to inaccurate output results of the student network. In addition, when the student network is guided by the teacher network, precision of the student network is limited and affected by precision of the teacher network, and consequently, output accuracy of the student network has no further room for improvement. Therefore, how to obtain a network with more accurate outputs becomes a problem that urgently needs to be resolved.

**SUMMARY**

Embodiments of this application provide a neural network distillation method and apparatus, to provide a neural network with a lower output bias, thereby improving output accuracy of the neural network. In addition, a proper distillation manner can be selected based on different scenarios, so that a generalization capability is strong.

In view of this, a first aspect of this application provides a neural network distillation method, including: first obtaining a sample set, where the sample set includes a biased data set and an unbiased data set, the biased data set includes biased samples, and the unbiased data set includes unbiased samples, and usually, a data volume of the biased data set is greater than a data volume of the unbiased data set; then determining a first distillation manner based on data features of the sample set, where in the first distillation manner, a teacher model is obtained through training by using the unbiased data set, and a student model is obtained through training by using the biased data set; and then training a first neural network based on the biased data set and the unbiased data set in the first distillation manner, to obtain an updated first neural network.

Therefore, in this application, the unbiased samples included in the unbiased data set may be used to guide a knowledge distillation process of the first neural network, so that the updated first neural network can output an unbiased result, to implement debiasing on input samples, thereby improving output accuracy of the first neural network. In addition, in the neural network distillation method provided in this application, a distillation manner matching the data features of the sample set may be selected. Different distillation manners may adapt to the different scenarios, thereby improving a generalization capability of performing knowledge distillation on the neural network. Different knowledge distillation manners are selected under different conditions, to maximize efficiency of knowledge distillation.

In a possible implementation, the first distillation manner is selected from a plurality of preset distillation manners, and the plurality of distillation manners include at least two distillation manners with different guiding manners of the teacher model for the student model.

Therefore, in this implementation of this application, different distillation manners may adapt to the different scenarios, thereby improving a generalization capability of performing knowledge distillation on the neural network. Different knowledge distillation manners are selected under different conditions, to maximize efficiency of knowledge distillation.

In a possible implementation, samples in the biased data set and the unbiased data set include input features and actual labels, and the first distillation manner is performing distillation based on the input features of the samples in the sample set.

In this implementation of this application, the unbiased data set may guide a knowledge distillation process of a model of the biased data set in a form of samples, so that a bias degree of obtained outputs of the updated first neural network is lower.

In a possible implementation, the training a first neural network based on the biased data set and the unbiased data set in the first distillation manner, to obtain an updated first neural network may include: training the first neural network by using the biased data set and the unbiased data set alternately, to obtain the updated first neural network, where in an alternate process, a quantity of batch training times of training the first neural network by using the biased data set and a quantity of batch training times of training the first neural network by using the unbiased data set are in a preset ratio, and the samples include the input features as inputs of the first neural network. Therefore, in this implementation of this application, training may be performed by using the biased data set and the unbiased data set alternately, and then the first neural network trained by using the biased data set is debiased by using the samples in the unbiased data set, so that a bias degree of outputs of the updated first neural network is lower.

In a possible implementation, when the preset ratio is 1, a difference between a first regularization term and a second regularization term is added to a loss function of the first neural network, the first regularization term is a parameter obtained by training the first neural network by using the samples included in the unbiased data set, and the second regularization term is a parameter obtained by training the first neural network by using the samples included in the biased data set.

Therefore, in this implementation of this application, the first neural network may be trained by using the biased data set and the unbiased data set in a 1:1 alternate manner and then the first neural network trained by using the biased data set is debiased by using the samples in the unbiased data set, so that a bias degree of outputs of the updated first neural network is lower.

In a possible implementation, the training a first neural network based on the biased data set and the unbiased data set in the first distillation manner, to obtain an updated first neural network may include: setting a confidence for the samples in the biased data set, where the confidence is used to represent a bias degree of the samples; and training the first neural network based on the biased data set, the confidence of the samples in the biased data set, and the unbiased data set, to obtain the updated first neural network, where the samples include the input features as inputs of the first neural network when the first neural network is trained.

In this implementation of this application, the confidence representing a bias degree may be set for the samples, so that the bias degree of the samples is learned when the neural network is trained, thereby reducing the bias degree of output results of the updated neural network.

In a possible implementation, the samples included in the biased data set and the unbiased data set include input features and actual labels, the first distillation manner is performing distillation based on prediction labels of the samples included in the unbiased data set, the prediction labels are output by an updated second neural network for the samples in the unbiased data set, and the updated second neural network is obtained by training a second neural network by using the unbiased data set.

Therefore, in this implementation of this application, knowledge distillation may be performed on the first neural network by using the prediction labels of the samples included in the unbiased data set. This may be understood as that the prediction labels that are of the samples in the unbiased data set and that are output by the teacher model may be used to complete guiding a learning model, so that the updated first neural network obtains output results with a lower bias degree under guidance of the prediction labels output by the teacher model.

In a possible implementation, the sample set further includes an unobserved data set, and the unobserved data set includes a plurality of unobserved samples; and the training a first neural network based on the biased data set and the unbiased data set in the first distillation manner, to obtain an updated first neural network may include: training the first neural network by using the biased data set, to obtain a trained first neural network, and training the second neural network by using the unbiased data set, to obtain the updated second neural network; acquiring a plurality of samples from the sample set, to obtain an auxiliary data set; and updating the trained first neural network by using the auxiliary data set and by using prediction labels of the samples in the data set as constraints, to obtain the updated first neural network, where the prediction labels of the samples in the auxiliary data set include labels output by the updated second neural network.

In this implementation of this application, the unobserved data set may be introduced, to alleviate bias impact of the biased data set on a training process of the first neural network, so that a bias degree of finally obtained output results of the first neural network is lower.

In a possible implementation, the training a first neural network based on the biased data set and the unbiased data set in the first distillation manner, to obtain an updated first neural network includes: training the second neural network by using the unbiased data set, to obtain the updated second neural network; outputting prediction labels of the samples in the biased data set by using the updated second neural network; performing weighted merging on the prediction labels of the samples and actual labels of the samples, to obtain merged labels of the samples; and training the first neural network by using the merged labels of the samples, to obtain the updated first neural network.

In this implementation of this application, guidance of the unbiased data set in a process of training the first neural network may be completed in a manner of performing weighted merging on the prediction labels of the samples and the actual labels of the samples, so that a bias degree of finally obtained output results of the first neural network is lower.

In a possible implementation, the data features of the sample set include the first ratio, the first ratio is a ratio of a sample quantity of the unbiased data set to a sample quantity of the biased data set, and the determining a first distillation manner based on data features of the sample set may include: selecting the first distillation manner matching the first ratio from a plurality of distillation manners.

Therefore, in this implementation of this application, the first distillation manner may be selected by using the ratio of the sample quantity of the unbiased data set to the sample quantity of the biased data set, to adapt to scenarios of different ratios of the sample quantity of the unbiased data set to the sample quantity of the biased data set.

In a possible implementation, the first distillation manner includes: training the teacher model based on features extracted from the unbiased data set, to obtain a trained teacher model, and performing knowledge distillation on the student model by using the trained teacher model and the biased data set.

Therefore, in this implementation of this application, the teacher model may be trained by using the features extracted from the unbiased data set, to obtain a teacher model with a lower bias degree and higher stability. Further, on this basis, a bias degree of output results of the student model obtained through guidance by using the teacher model is lower.

In a possible implementation, the training a first neural network based on the biased data set and the unbiased data set in the first distillation manner, to obtain an updated first neural network may include: filtering input features of some samples from the unbiased data set by using a preset algorithm, where the preset algorithm may be a deep global balancing regression (deep global balancing regression, DGBR) algorithm; training the second neural network based on the input features of some samples, to obtain the updated second neural network; and using the updated second neural network as the teacher model, using the first neural network as the student model, and performing knowledge distillation on the first neural network by using the biased data set, to obtain the updated first neural network.

Therefore, in this implementation of this application, stable features of the unbiased data set may be calculated, and the stable features are used to train the second neural network, to obtain the updated second neural network with a lower bias degree of output results and higher robustness, and the updated second neural network is used as the teacher model, and the first neural network is used as the student model, and knowledge distillation is performed on the first neural network by using the biased data set, to obtain the updated first neural network with a lower output bias degree.

In a possible implementation, the data features of the sample set include a quantity of feature dimensions, and the determining a first distillation manner based on data features of the sample set may include: selecting the first distillation manner matching the quantity of the feature dimensions from a plurality of distillation manners.

Therefore, in this implementation of this application, a feature-based distillation manner may be selected based on the quantity of feature dimensions included in the unbiased data set and the biased data set, to adapt to a scenario in which a quantity of feature dimensions is larger, to obtain a student model with a lower output bias degree.

In a possible implementation, the training a first neural network based on the biased data set and the unbiased data set in the first distillation manner, to obtain an updated first neural network may include: updating the second neural network by using the unbiased data set, to obtain the updated second neural network; using the updated second neural network as the teacher model, using the first neural network as the student model, and performing knowledge distillation on the first neural network by using the biased data set, to obtain the updated first neural network.

Therefore, in this implementation of this application, a conventional neural network knowledge distillation process may be used, and the unbiased data set may be used to train the teacher model, to reduce an output bias degree of the teacher model, and knowledge distillation is performed on the student model by using the teacher model and by using the biased database, to reduce an output bias degree of the student model.

In a possible implementation, the determining a first distillation manner based on data features of the sample set may include: if the data features of the sample set include a second ratio, calculating the second ratio of a quantity of positive samples included in the unbiased data set to a quantity of negative samples included in the unbiased data set, and selecting the first distillation manner matching the second ratio from a plurality of distillation manners; or if the data features of the sample set include a third ratio, calculating the third ratio of a quantity of positive samples included in the biased data set to a quantity of negative samples included in the biased data set, and selecting the first distillation manner matching the third ratio from a plurality of distillation manners.

Therefore, in this implementation of this application, a conventional model structure based distillation manner may be selected by using a ratio of positive samples to negative samples in the unbiased data set or the biased data set, to adapt to a scenario of the ratio of the positive samples to the negative samples in the unbiased data set or the biased data set.

In a possible implementation, a type of the samples included in the biased data set is different from a type of the samples included in the unbiased data set.

Therefore, in this implementation of this application, the type of the samples included in the biased data set is different from the type of the samples included in the unbiased data set. This may be understood as that the samples included in the biased data set and the samples included in the unbiased data set are data in different domains, so that guidance and training can be performed by using the data in different domains. In this way, the obtained updated first neural network can output data in a domain different from a domain of input data. For example, in a recommendation scenario, cross-domain recommendation can be implemented.

In a possible implementation, after the updated first neural network is obtained, the foregoing method may further include: obtaining at least one sample of a target user; using the at least one sample as an input of the updated first neural network, and outputting at least one label of the target user, where the at least one label is used to construct a user portrait of the target user, and the user portrait is used to determine a sample matching the target user.

Therefore, in this implementation of this application, one or more labels of the user may be output by using the updated first neural network, and representative features of the user are determined based on the one or more labels, to construct the user portrait of the target user, where the user portrait is used to describe the target user, so that in a subsequent recommendation scenario, the sample matching the target user can be determined by using the user portrait.

According to a second aspect, this application provides a communication method. The method includes: obtaining information about a target user and information about a recommended object candidate; inputting the information about the target user and the information about the recommended object candidate into a recommendation model, and predicting a probability that the target user performs an operational action on the recommended object candidate, where the recommendation model is obtained by training a first neural network by using a biased data set and an unbiased data set in a sample set in a first distillation manner, the biased data set includes biased samples, the unbiased data set includes unbiased samples, the first distillation manner is determined based on data features of the sample set, the samples in the biased data set include information about a first user, information about a first recommended object, and actual labels, the actual labels of the samples in the unbiased data set are used to represent whether the first user performs an operational action on the first recommended object, the samples in the unbiased data set include information about a second user, information about a second recommended object, and actual labels, and the actual labels of the samples in the unbiased data set are used to represent whether the second user performs an operational action on the second recommended object.

The recommendation model may be obtained by guiding, by using a teacher model obtained through training by using unbiased data, a student model obtained through training by using biased data, so that the recommendation model with a low output bias degree can be used to recommend a matching recommended object for the user, to make a recommendation result more accurate, thereby improving user experience.

In a possible implementation, the unbiased data set is obtained when the recommended object candidate in a recommended object candidate set is displayed at a same probability, and the second recommended object is a recommended object candidate in the recommended object candidate set.

In a possible implementation, that the unbiased data set is obtained when the recommended object candidate in a recommended object candidate set is displayed at a same probability includes: The samples in the unbiased data set are obtained when the recommended object candidate in the recommended object candidate set is randomly displayed to the second user; or the samples in the unbiased data set are obtained when the second user searches for the second recommended object.

In a possible implementation, the samples in the unbiased data set are data in a source domain, and the samples in the biased data set are data in a target domain.

According to a third aspect, this application provides a recommendation method, including: displaying a first interface, where the first interface includes a learning list of at least one application, a learning list of a first application in the learning list of the at least one application includes at least one option, and an option in the at least one option is associated with one application; sensing a first operation of a user in the first interface; and enabling or disabling a cross-domain recommendation function of the first application in applications associated with some or all of the options in the learning list of the first application in response to the first operation.

Based on the solution in this embodiment of this application, migration and sharing of knowledge (for example, an interest preference of a user) are performed between different domains, and historical user interaction records in a source domain and a target domain are both incorporated into learning, so that a recommendation model can better learn the preference of the user, and can also well fit the interest preference of the user in the target domain, and recommend, to the user, a recommendation result that matches the interest of the user, to implement cross-domain recommendation, and alleviate a cold start problem.

In a possible implementation, one or more recommended objects are determined by inputting information about the user and information about a recommended object candidate into a recommendation model, and predicting a probability that the user performs an operational action on the recommended object candidate.

In a possible implementation, the recommendation model is obtained by training a first neural network by using a biased data set and an unbiased data set in a sample set in a first distillation manner, the biased data set includes biased samples, the unbiased data set includes unbiased samples, the first distillation manner is determined based on data features of the sample set, the samples in the biased data set include information about a first user, information about a first recommended object, and actual labels, the actual labels of the samples in the unbiased data set are used to represent whether the first user performs an operational action on the first recommended object, the samples in the unbiased data set include information about a second user, information about a second recommended object, and actual labels, and the actual labels of the samples in the unbiased data set are used to represent whether the second user performs an operational action on the second recommended object.

According to a fourth aspect, this application provides a neural network distillation apparatus. The neural network distillation apparatus has a function of implementing the neural network distillation method in the first aspect. The function may be implemented by hardware, or may be implemented by hardware executing corresponding software. The hardware or the software includes one or more modules corresponding to the function.

According to a fifth aspect, this application provides a recommendation apparatus. The recommendation apparatus has a function of implementing the recommendation method in the second aspect. The function may be implemented by hardware, or may be implemented by hardware executing corresponding software. The hardware or the software includes one or more modules corresponding to the function.

According to a sixth aspect, this application provides an electronic device. The electronic device has a function of implementing the recommendation method in the aspect. The function may be implemented by hardware, or may be implemented by hardware executing corresponding software. The hardware or the software includes one or more modules corresponding to the function.

According to a seventh aspect, an embodiment of this application provides a neural network distillation apparatus, including a processor and a memory, where the processor and the memory are interconnected through a line, and the processor invokes program code in the memory to perform a function related to processing in the neural network distillation method in any implementation of the first aspect.

According to an eighth aspect, an embodiment of this application provides a recommendation apparatus, including a processor and a memory. The processor and the memory are interconnected through a line, and the processor invokes program code in the memory to perform a processing-related function in the recommendation method in any implementation of the second aspect.

According to a ninth aspect, an embodiment of this application provides an electronic device, including a processor and a memory. The processor and the memory are interconnected through a line, and the processor invokes program code in the memory to perform a processing-related function in the recommendation method in any implementation of the third aspect.

According to a tenth aspect, an embodiment of this application provides a neutral network distillation apparatus. The data transmission apparatus may also be referred to as a digital processing chip or a chip. The chip includes a processing unit and a communications interface. The processing unit obtains program instructions through the communications interface, and when the program instructions are executed by the processing unit, the processing unit is configured to perform a processing-related function according to the first aspect or any optional implementation of the first aspect.

According to an eleventh aspect, an embodiment of this application provides a recommendation apparatus. The data transmission apparatus may also be referred to as a digital processing chip or a chip. The chip includes a processing unit and a communications interface. The processing unit obtains program instructions through the communications interface, and when the program instructions are executed by the processing unit, the processing unit is configured to perform a processing-related function according to the second aspect or any optional implementation of the second aspect.

According to a twelfth aspect, an embodiment of this application provides an electronic device. The data transmission apparatus may also be referred to as a digital processing chip or a chip. The chip includes a processing unit and a communications interface. The processing unit obtains program instructions through the communications interface, and when the program instructions are executed by the processing unit, the processing unit is configured to perform a processing-related function according to the third aspect or any optional implementation of the third aspect.

According to a thirteenth aspect, an embodiment of this application provides a computer-readable storage medium, including instructions. When the instructions are run on a computer, the computer is enabled to perform the method in the first aspect, in any optional implementation of the first aspect, in the second aspect, in any optional implementation of the second aspect, in the third aspect, or in any optional implementation of the third aspect.

According to a fourteenth aspect, an embodiment of this application provides a computer program product including instructions. When the computer program product runs on a computer, the computer is enabled to perform the method in the first aspect, in any optional implementation of the first aspect, in the second aspect, in any optional implementation of the second aspect, in the third aspect, or in any optional implementation of the third aspect.

## BRIEF DESCRIPTION OF DRAWINGS

FIG. 1 is a schematic diagram of an artificial intelligence main framework to which this application is applied;
FIG. 2 is a schematic diagram of an architecture of a system according to this application;
FIG. 3 is a schematic diagram of a structure of a convolutional neural network according to an embodiment of this application;
FIG. 4 is a schematic diagram of a structure of another convolutional neural network according to an embodiment of this application;

FIG. 5 is a schematic diagram of an architecture of a system according to this application;

FIG. 6 is a schematic flowchart of a neural network distillation method according to this application;

FIG. 7 is a schematic diagram of a relationship between a click-through rate and a recommendation location according to this application;

FIG. 8 is a schematic diagram of a neural network distillation architecture according to this application;

FIG. 9 is a schematic diagram of another neural network distillation architecture according to this application;

FIG. 10 is a schematic diagram of another neural network distillation architecture according to this application;

FIG. 11 is a schematic flowchart of a recommendation method according to this application;

FIG. 12 is a schematic diagram of an application scenario of a recommendation method according to this application;

FIG. 13 is a schematic diagram of an application scenario of a recommendation method according to this application;

FIG. 14 is a schematic diagram of an application scenario of a recommendation method according to this application;

FIG. 15 is a schematic diagram of an application scenario of a recommendation method according to this application;

FIG. 16 is a schematic diagram of an application scenario of a recommendation method according to this application;

FIG. 17(a), FIG. 17(b), FIG. 17(c), and FIG. 17(d) are a schematic diagram of an application scenario of a recommendation method according to this application;

FIG. 18(a) and FIG. 18(b) are a schematic diagram of an application scenario of a recommendation method according to this application;

FIG. 19(a) and FIG. 19(b) are a schematic diagram of an application scenario of a recommendation method according to this application;

FIG. 20 is a schematic flowchart of another recommendation method according to this application;

FIG. 21 is a schematic diagram of a structure of a neural network distillation apparatus according to this application;

FIG. 22 is a schematic diagram of a structure of a recommendation apparatus according to this application;

FIG. 23 is a schematic diagram of a structure of an electronic device according to this application;

FIG. 24 is a schematic diagram of a structure of another neural network distillation apparatus according to this application;

FIG. 25 is a schematic diagram of a structure of another recommendation apparatus according to this application;

FIG. 26 is a schematic diagram of a structure of an electronic device according to this application; and

FIG. 27 is a schematic diagram of a structure of a chip according to this application.

## DESCRIPTION OF EMBODIMENTS

The following describes the technical solutions in embodiments of this application with reference to the accompanying drawings in embodiments of this application. It is clear that described embodiments are merely some but not all of embodiments of this application. All other embodiments obtained by a person skilled in the art based on embodiments of this application without creative efforts shall fall within the protection scope of this application.

A training set processing method provided in this application may be applied to an artificial intelligence (artificial intelligence, AI) scenario. AI uses digital computers or machines controlled by digital computers to simulate and extend human intelligence, sense the environment, obtain knowledge, and use the knowledge to generate an optimal theory, method, technology, and application. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have sensing, inference, and decision-making functions. Researches in an artificial intelligence field include a robot, natural language processing, computer vision, decision-making and inference, human-computer interaction, recommendation and search, an AI basic theory, and the like.

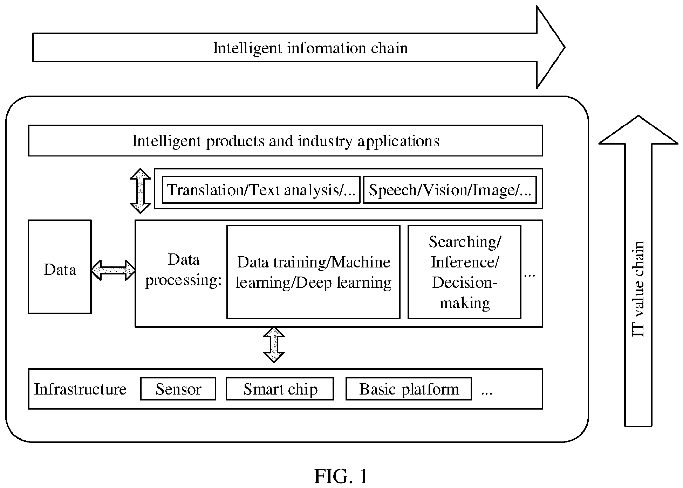

An overall working procedure of an artificial intelligence system is first described. FIG. 1 is a schematic diagram of an artificial intelligence main framework. The following describes the foregoing artificial intelligence main framework from two dimensions: "intelligent information chain" (horizontal axis) and "IT value chain" (vertical axis). The "intelligent information chain" reflects a series of processes from data obtaining to data processing. For example, the process may be a general process of intelligent information sensing, intelligent information representation and formation, intelligent inference, intelligent decision-making, and intelligent execution and output. In this process, the data is refined as follows: data-information-knowledge-intelligence. The "IT value chain" is an industrial ecological process from an underlying infrastructure and information (providing and technology processing) of artificial intelligence to an artificial intelligence system and reflects a value brought by artificial intelligence to the information technology industry.

(1) Infrastructure

The infrastructure provides calculation capability support for the artificial intelligence system, communicates with an external world, and implements supporting by using a basic platform. The infrastructure communicates with the outside by using a sensor. A calculation capability is provided by a smart chip (a hardware acceleration chip like a CPU, an NPU, a GPU, an ASIC, or an FPGA). The basic platform includes related platform assurance and support such as a distributed calculation framework and a network, and may include cloud storage and computing, an interconnection and interworking network, and the like. For example, the sensor communicates with the outside to obtain data, and the data is provided to a smart chip in a distributed calculation system for calculation, where the distributed calculation system is provided by the basic platform.

(2) Data

Data at an upper layer of the infrastructure is used to indicate a data source in the field of artificial intelligence. The data relates to a graph, an image, a voice, and a text, further relates to internet of things data of a conventional device, and includes service data of an existing system and sensed data such as force, displacement, a liquid level, a temperature, and humidity.

(3) Data processing

The data processing usually includes manners such as data training, machine learning, deep learning, searching, inference, and decision-making.

The machine learning and the deep learning may mean performing symbolic and formalized intelligent information modeling, extraction, preprocessing, training, and the like on data.

The inference is a process in which a human intelligent inference manner is simulated on a computer or in an intelligent system, and machine thinking and problem resolving are performed by using formal information according to an inference control policy. Typical functions of searching and matching are provided.

The decision-making is a process in which a decision is made after intelligent information inference, and usually provides functions such as classification, ranking, and prediction.

(4) General capabilities

After data processing mentioned above is performed, some general capabilities may be further formed based on a data processing result, for example, an algorithm or a general system, such as translation, text analysis, computer vision processing, speech recognition, and image recognition.

(5) Intelligent products and industry applications

The intelligent products and industry applications are products and applications of the artificial intelligence system in various fields and are encapsulation of the overall artificial intelligence solution and productization of intelligent information decision-making, to implement actual application. Application fields of the intelligent products and industry applications mainly include: intelligent terminals, intelligent transportation, intelligent health care, autonomous driving, safe cities, and the like.

Embodiments of this application relate to a large quantity of neural network-related applications. To better understand the solutions in embodiments of this application, the following first describes terms and concepts that are related to the neural network and that may be used in embodiments of this application.

(1) Neural network

The neural network may include a neuron. The neuron may be an operation unit that uses $x_s$ and an intercept 1 as an input, and an output of the operation unit may be shown in formula (1):

$$h_{W,b}(x) = f(W^T x) = f(\sum_{s=1}^{n} W_s x_s + b) \tag{1-1}$$

where s=1, 2, ..., n, n is a natural number greater than 1, $W_s$ represents a weight of $x_s$, and b represents a bias of the neuron. f represents an activation function (activation function) of the neuron, where the activation function is used to introduce a non-linear characteristic into the neural network, to convert an input signal in the neuron into an output signal. The output signal of the activation function may be used as input of a next convolutional layer, and the activation function may be a sigmoid function. The neural network is a network constituted by connecting a plurality of single neurons together. To be specific, output of a neuron may be input of another neuron. Input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. Based on positions of different layers, neural network layers inside the DNN may be classified into three types: an input layer, a hidden layer, and an output layer. Generally, the first layer is the input layer, the last layer is the output layer, and a layer between the first layer and the last layer is the hidden layer. Layers are fully connected. To be specific, any neuron in an $i^{th}$ layer is necessarily connected to any neuron in an $(i + 1)^{th}$ layer.

(3) Convolutional neural network

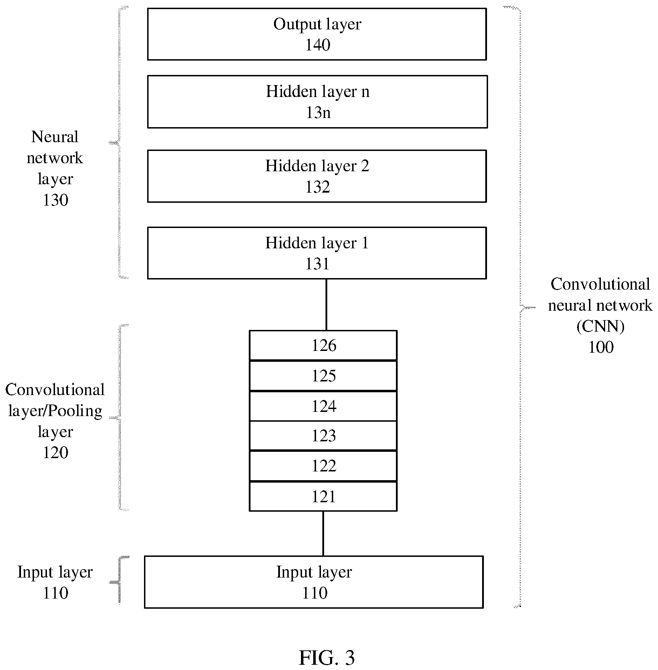

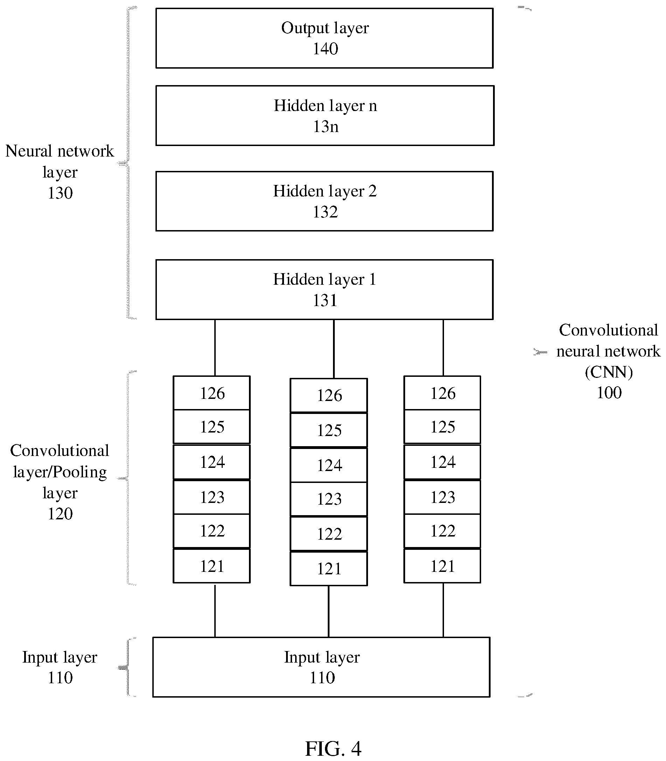

The convolutional neural network (convolutional neural network, CNN) is a deep neural network with a convolutional structure. The convolutional neural network includes a feature extractor including a convolutional layer and a sub-sampling layer. The feature extractor may be considered as a filter. The convolutional layer is a neuron layer that performs convolution processing on an input signal and that is in the convolutional neural network. In the convolutional layer of the convolutional neural network, one neuron may be connected to only a part of neurons in a neighboring layer. A convolutional layer generally includes several feature planes, and each feature plane may include some neurons arranged in the form of a rectangle. Neurons of a same feature plane share a weight, and the shared weight herein is a convolution kernel. Sharing the weight may be understood as that a manner of extracting image information is unrelated to a position. The convolution kernel may be initialized in a form of a matrix of a random size. In a training process of the convolutional neural network, an appropriate weight may be obtained for the convolution kernel through learning. In addition, sharing the weight has benefits of reducing connections between layers of the convolutional neutral network and reducing a risk of overfitting. For example, for the structure of the convolutional neural network, refer to structures shown in FIG. 3 and FIG. 4.

(4) A recurrent neural network (recurrent neural network, RNN) is used to process sequence data. In a conventional neural network model, from an input layer to a hidden layer and then to an output layer, the layers are fully connected, but nodes in each layer are not connected. This common neural network resolves many problems, but is still incompetent to resolve many other problems. For example, to predict a next word in a sentence, a previous word usually needs to be used, because adjacent words in the sentence are not independent. A reason why the RNN is referred to as a recurrent neural network is that current output of a sequence is related to previous output. A specific representation form is that the network memorizes previous information and applies the previous information to calculation of the current output. To be specific, nodes in the hidden layer are no longer unconnected, but are connected, and input for the hidden layer includes not only output of the input layer but also output of the hidden layer at a previous moment. Theoretically, the RNN can process sequence data of any length. Training of the RNN is the same as training of a conventional CNN or DNN.

(5) Adder neural network (adder neural network, ANN)

The adder neural network is a neural network that includes almost no multiplication. Different from the convolutional neural network, the adder neural network uses an L1 distance to measure a correlation between features and filters in the neural network. Because the L1 distance includes only addition and subtraction, a large quantity of multiplication operations in the neural network can be replaced with addition and subtraction, so that computation costs of the neural network are greatly reduced.

In the ANN, a metric function with addition only, namely, the L1 distance, is usually used to replace convolution calculation in the convolutional neural network. By using the L1 distance, output features may be recalculated as:

$$Y(m,n,t) = \sum_{i=0}^{d-1}\sum_{j=0}^{d-1}\sum_{k=1}^{C} \left| X(m+i,n+j,k) + F(i,j,k,t) \right| \qquad (1)$$

$$\text{or,} \quad Y(m,n,t) = \sum_{i=0}^{d-1}\sum_{j=0}^{d-1}\sum_{k=1}^{C} -\left| X(m+i,n+j,k) + F(i,j,k,t) \right| \qquad (2)$$

where $|(\cdot)|$ represents an absolute value calculation operation, $\sum(\cdot)$ represents a summation operation, $Y(m, n, t)$ represents at least one output subfeature map, $Y(m, n, t)$ represents an element in an $m^{th}$ row, an $n^{th}$ column, and a $t^{th}$ page in the output feature diagram, $X(m + i, n + j, k)$ represents an element in an $i^{th}$ row, a $j^{th}$ column, and a $k^{th}$ page in the at least one input sub-feature diagram, $F(i, j, k, t)$ represents an element in an $i^{th}$ row, a $j^{th}$ column, and a $k^{th}$ page in a feature extraction kernel, $t$ represents a quantity of channels of the feature extraction kernel, $d$ represents a quantity of rows of the feature extraction kernel, $C$ represents a quantity of channels of the input feature diagram, and $d, C, i, J, k, m, n$, and $t$ are all integers.

It can be seen that the ANN only needs to use addition, and by changing the metric manner for calculating features in convolution to the L1 distance, only the addition may be used to extract the features in the neural network, and the adder neural network is constructed.

(5) Loss function

In a process of training a deep neural network, because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible. In this implementation of this application, a difference between the objective function and the loss function lies in that, in addition to the loss function, the objective function may further include a constraint function, used to constrain updating of the neural network, so that the neural network obtained through updating is closer to an expected neural network.

(6) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until an error loss occurs in output, and the parameters in the initial neural network model are updated based on back propagation error loss information, so that the error loss is reduced. The back propagation algorithm is a back propagation motion mainly dependent on the error loss, and aims to obtain parameters of an optimal neural network model, for example, a weight matrix.

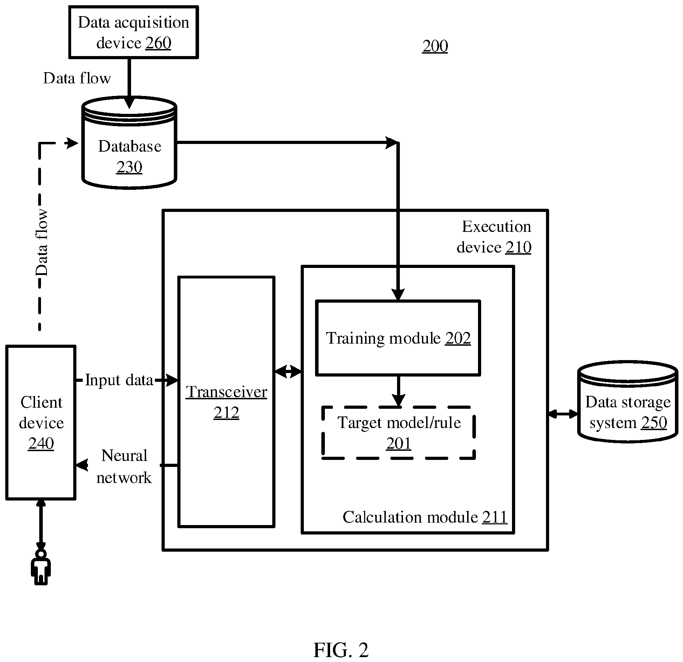

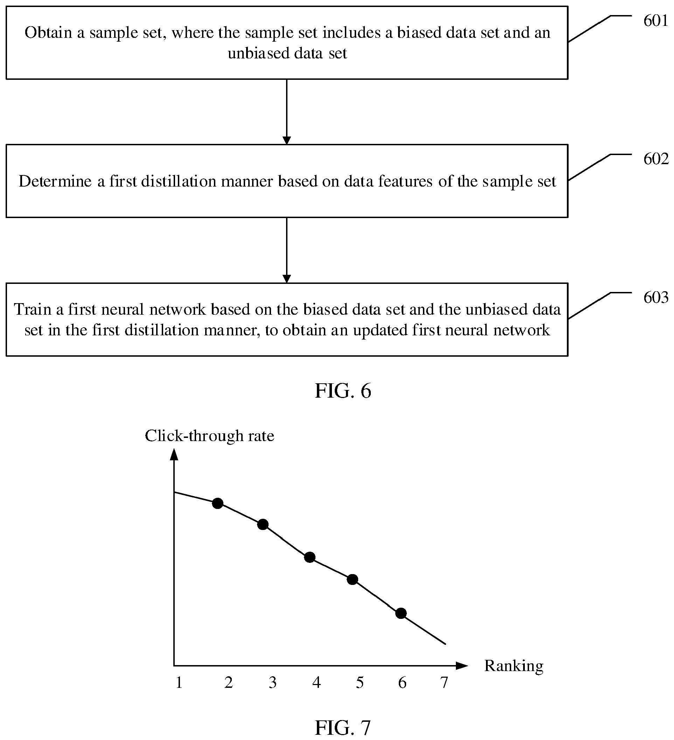

Refer to FIG. 2. An embodiment of the present invention provides a system architecture 200. The system architecture includes a database 230 and a client device 240. A data acquisition device 260 is configured to: acquire data and store the data in the database 230. A training module 202 generates a target model/rule 201 based on data maintained in the database 230. The following describes in more detail how the training module 202 obtains the target model/rule 201 based on the data. The target model/rule 201 is a neural network obtained through construction in the following implementations of this application. For details, refer to the following related descriptions in FIG. 6 to FIG. 20.

A calculation module may include the training module 202. The target model/rule obtained by the training module 202 may be applied to different systems or devices. In FIG. 2, an execution device 210 configures a transceiver 212. The transceiver 212 may be a wireless transceiver, an optical transceiver, a wired interface (for example, an I/O interface), or the like, and exchanges data with an external device. A "user" may input data into the transceiver 212 by using the client device 240. For example, in the following implementation of this application, the client device 240 may send a target task to the execution device 210, to request the execution device to construct the neural network, and send a database for training to the execution device 210.

The execution device 210 may invoke data, code, and the like in the data storage system 250, or may store data, instructions, and the like in the data storage system 250.

The calculation module 211 processes the input data by using the target model/rule 201. Specifically, the calculation module 211 is configured to: obtain a biased data set and an unbiased data set, where the biased data set includes biased samples, and the unbiased data set includes unbiased samples, and a data volume of the biased data set is greater than a data volume of the unbiased data set; select a first distillation manner from a plurality of preset distillation manners based on at least one of data included in the biased data set or data included in the unbiased data set, where guiding manners of a teacher model for a student model during knowledge distillation in the plurality of distillation manners are different, and a model obtained through training by using the unbiased data set is used to guide a model obtained through training by using the biased data set; and train a first neural network based on the biased data set and the unbiased data set in the first distillation manner, to obtain an updated first neural network.

Finally, the transceiver 212 returns the neural network obtained through construction to the client device 240, to deploy the neural network in the client device 240 or another device.

More deeply, the training module 202 may generate, for different tasks, corresponding target models/rules 201 based on different data, so as to provide a better result for the user.

In the case shown in FIG. 2, data input into the execution device 210 may be determined based on the input data of the user. For example, the user may perform an operation in an interface provided by the transceiver 212. In another case, the client device 240 may automatically input data into the transceiver 212 and obtain a result. If the client device 240 needs to obtain authorization of the user for automatically inputting the data, the user may set corresponding permission on the client device 240. The user may view, on the client device 240, a result output by the execution device 210. A specific presentation form may be a specific manner, for example, display, a voice, or an action. The client device 240 may alternatively store, as a data acquisition end, acquired data associated with the target task in the database 230.

It should be noted that, FIG. 2 is merely an example of a schematic diagram of a system architecture according to an embodiment of this application. Location relationships between devices, components, and modules shown in the figure constitute no limitation. For example, in FIG. 2, the data storage system 250 is an external memory relative to the execution device 210. In other scenarios, the data storage system 250 may alternatively be placed in the execution device 210.

A training or updating process mentioned in this application may be performed by the training module 202. It may be understood that, the training process of the neural network is learning a manner of controlling space transformation, more specifically, learning a weight matrix. A purpose of training the neural network is to make an output of the neural network close to an expected value to the greatest extent. Therefore, a weight vector of each layer in the neural network may be updated by comparing a predicted value with the expected value of the current network and then based on the difference between the two values (certainly, the weight vector may be usually initialized first before the first update, that is, a parameter is preconfigured for each layer in the deep neural network). For example, if the predicted value of the network is excessively high, a value of a weight in a weight matrix is adjusted to reduce the predicted value, and adjustment is continuously performed until a value output by the neural network is close to the expected value or equal to the expected value. Specifically, the difference between the predicted value and the expected value of the neural network may be measured by using a loss function (loss function) or an objective function (objective function). The loss function is used as an example. A higher output value (loss) of the loss function indicates a larger difference. Training of the neural network may be understood as a process of minimizing the loss to the greatest extent. For a process of updating a weight of a start point network and training a serial network in the following implementations of this application, refer to this process. Details are not described below again.

As shown in FIG. 2, the target model/rule 201 is obtained through training based on the training module 202. In embodiments of this application, the target model/rule 201 may be the first neural network in this application. Specifically, the first neural network, a second neural network, a teacher model, a student model, or the like provided in embodiments of this application may be a deep convolutional neural network (deep convolutional neural network, DCNN), a recurrent neural network (recurrent neural network, RNN), or the like. The neural network mentioned in this application may include a plurality of types, for example, a deep neural network (deep neural network, DNN), a convolutional neural network (convolutional neural network, CNN), a recurrent neural network (recurrent neural network, RNN), a residual network, or another neural network.

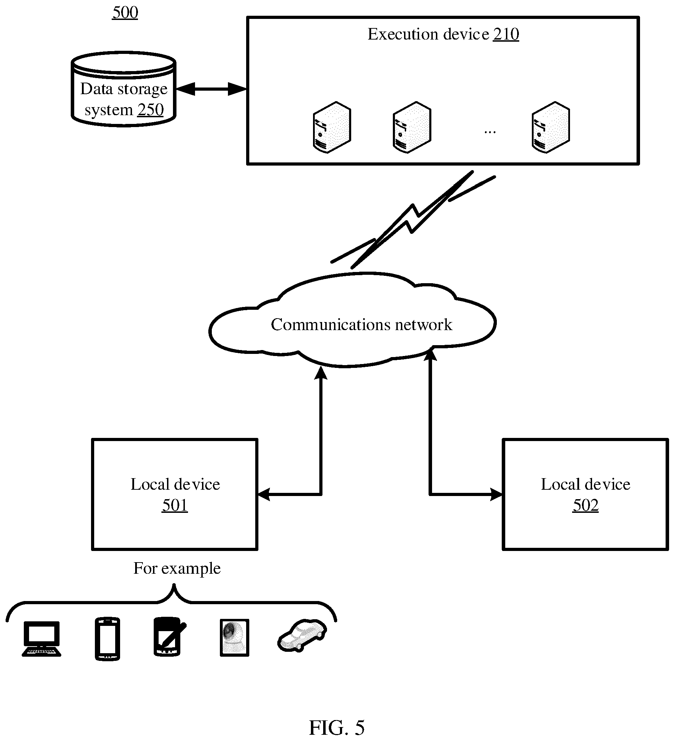

Refer to FIG. 5. An embodiment of this application provides a system architecture 500. The execution device 210 is implemented by one or more servers. Optionally, the execution device 210 cooperates with another computing device, for example, a data storage device, a router, or a load balancer. The execution device 210 may be disposed on one physical site, or distributed on a plurality of physical sites. The execution device 210 may implement the following steps of a training set processing method corresponding to FIG. 6 in this application by using data in a data storage system 250, or by invoking program code in the data storage system 250.

A user may operate user equipment (for example, a local device 501 and a local device 502) to interact with the execution device 210. Each local device may be any computing device, such as a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 210 through a communications network of any communications mechanism/communications standard. The communications network may be a wide area network, a local area network, a point-to-point connection, or any combination thereof. Specifically, the communications network may include a wireless network, a wired network, a combination of a wireless network and a wired network, or the like. The wireless network includes but is not limited to any one or more of a 5th-generation (5th-generation, 5G) mobile communications technology system, a long term evolution (long term evolution, LTE) system, a global system for mobile communications (global system for mobile communications, GSM), a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (ZigBee), a radio frequency identification (radio frequency identification, RFID) technology, long range (Long Range, Lora) wireless communication, and near field communication (near field communication, NFC). The wired network may include an optical fiber communications network, a network including coaxial cables, or the like.

In another implementation, one or more aspects of the execution device 210 may be implemented by each local device. For example, the local device 501 may provide local data for or feed back a calculation result to the execution device 210.

A data processing method provided in this embodiment of this application may be performed on a server, or may be performed on a terminal device. The terminal device may be a mobile phone with an image processing function, a tablet personal computer (tablet personal computer, TPC), a media player, a smart television, a laptop computer (laptop computer, LC), a personal digital assistant (personal digital assistant, PDA), a personal computer (personal computer, PC), a camera, a video camera, a smartwatch, a wearable device (wearable device, WD), an autonomous vehicle, or the like. This is not limited in this embodiment of this application.

Usually, through knowledge distillation, knowledge can be transferred from one network to another, and the two networks may be homogeneous or heterogeneous. The practice is to train a teacher network first, or referred to as a teacher model, and then use outputs of the teacher network to train a student network, or referred to as a student model. During knowledge distillation, another simple network may be trained by using a pre-trained complex network, so that the simple network can have a data processing capability the same as or similar to that of the complex network.

Some small networks can be quickly and conveniently implemented through knowledge distillation. For example, a complex network model with a large amount of data may be trained on a cloud server or an enterprise-level server, and then knowledge distillation is performed to obtain a small model with the same function. The small model is compressed and migrated to a small device (such as a mobile phone or a smart band). In another example, by acquiring a large amount of data of a user on the smart band, and by performing complex and time-consuming network training on the cloud server, a user behavior recognition model is obtained, and then the model is compressed and migrated to a small carrier, namely, the smart band, so that the model can be trained quickly and user experience can be improved when it is ensured that user privacy is protected.

However, when the teacher model is used to guide the student model, output accuracy of the student model is usually limited by output accuracy of the teacher model, and consequently, the output accuracy of the student model has no further room for improvement. In addition, when knowledge distillation is performed, a biased data set is usually used. Consequently, an output of the student model obtained through training is biased, that is, an output result is inaccurate.

Therefore, this application provides a neural network distillation method, used to select a proper guiding manner for a data set used for training, complete knowledge distillation of the neural network, and use a model trained by using an unbiased data set to guide a model obtained by training a biased data set, to reduce an output bias degree of the student model, thereby improving output accuracy of the student model.

The neural network distillation method provided in this application may be applied to a recommendation system, user portrait recognition, image recognition, or another debiasing scenario. The recommendation system may be configured to recommend an application (application, app), music, an image, a video, a product, or the like to a user. The user portrait is used to reflect a feature, a preference, or the like of the user.

The neural network distillation method provided in this application is described in detail below. FIG. 6 is a schematic flowchart of a neural network distillation method according to this application.

601. Obtain a sample set, where the sample set includes a biased data set and an unbiased data set.

The sample set includes at least the biased data set and the unbiased data set, the biased data set includes samples with biases (which are referred to as biased samples below), and the unbiased data set includes samples without biases (which are referred to as unbiased samples below), and usually, a data volume of the biased data set is greater than a data volume of the unbiased data set.

For ease of understanding, the samples with biases may be understood as samples with a deviation from samples actually used by a user. For example, as a feedback loop (feedback loop) system, a recommendation system usually faces various bias problems, for example, a location bias, a popularity bias, and a preorder model bias. Existence of these biases makes user feedback data acquired by the recommendation system fail to reflect a real preference of the user.

In addition, biases of samples may be different in different scenarios, for example, a location bias, a selection bias, or a popularity bias. For example, a scenario in which an item is recommended to a user is used as an example. The location bias may be understood as follows: When a user is described, an item located at a better location is preferentially selected for interaction, and this tendency is irrelevant to whether the item meets an actual requirement of the user. The selection bias may be understood as follows: A "researched group" cannot represent a "target group", and consequently, measurement of a risk or a benefit of the "researched group" cannot accurately represent the "target group", and an obtained conclusion cannot be generalized effectively.

For example, a scenario in which an app is recommended to a user is used as an example. FIG. 7 shows a click-through rate of a same app at each recommendation location under a random placement policy. It can be seen that as the recommendation location is more backward, the click-through rate of the app becomes lower, which indicates impact of the location bias on the click-through rate. The location bias leads to a higher click-through rate of an app whose recommendation location is more forward, and a lower click-through rate of an app whose recommendation location is more backward. If such click-through data is used to train a model, the Matthew effect of a model obtained through training is aggravated, and output results of the model are polarized. For example, it is assumed that the user searches the recommendation system for an app, apps that meet a requirement of the user include an app 1 and an app 2, and the app 2 better meets the search requirement of the user. However, because the click-through rate of the app 1 is higher, the recommendation location of the app 1 is better. As a result, the user taps the app 1 but does not tap the app 2. When an app is recommended to the user subsequently, recommendation is performed with reference to historical data (biased samples) of tapping the app 1 by the user. However, the actual requirement of the user should be associated with the app 2 (unbiased samples). This may result in inaccurate recommendation to the user.

Unbiased data may be acquired in a uniform data (uniform data) manner. The recommendation system is used as an example. A specific process of acquiring the unbiased data set may include: performing random sampling in all candidate sets, then randomly displaying samples obtained through random sampling, then acquiring feedback data for the randomly displayed samples, and obtaining the unbiased samples from the feedback data. It may be understood that all samples in the candidate set have equal opportunities to be displayed to the user for selection, and therefore the unbiased data set may be considered as a good unbiased proxy.

602. Determine a first distillation manner based on data features of the sample set.

The first distillation manner may be determined based on the data features included in the sample set. Specifically, after the biased data set and the unbiased data set are obtained, a matching distillation manner is selected from a plurality of preset distillation manners based on the biased data set and/or the unbiased data set, to obtain the first distillation manner.

Usually, the first distillation manner is selected from the plurality of preset distillation manners, and the plurality of distillation manners include at least two distillation manners with different guiding manners of a teacher model for a student model. Usually, the unbiased data set is used to train the teacher model, and the biased data set is used to train the student model, that is, a model obtained through training by using the unbiased data set is used to guide a model obtained by using the biased data set.

Optionally, the plurality of preset distillation manners may include but are not limited to one or more of the following: sample distillation, label distillation, feature distillation, model structure distillation, or the like.

Sample distillation is distillation by using the samples in the biased data set and the unbiased data set. For example, the samples in the unbiased data set are used to guide knowledge distillation of the student model.

Label distillation is distillation of the student model by using, as a guide, prediction labels of the samples in the unbiased data set, where the prediction labels are output by the teacher model, and the teacher model is obtained through training based on the unbiased data set.

Feature distillation is training the teacher model based on features extracted from the unbiased data set, and performing knowledge distillation by using the teacher model and the biased data set.

Model structure distillation is training by using the unbiased data set to obtain the teacher model, and performing knowledge distillation on the student model by using the teacher model and the biased data set, to obtain an updated student model.

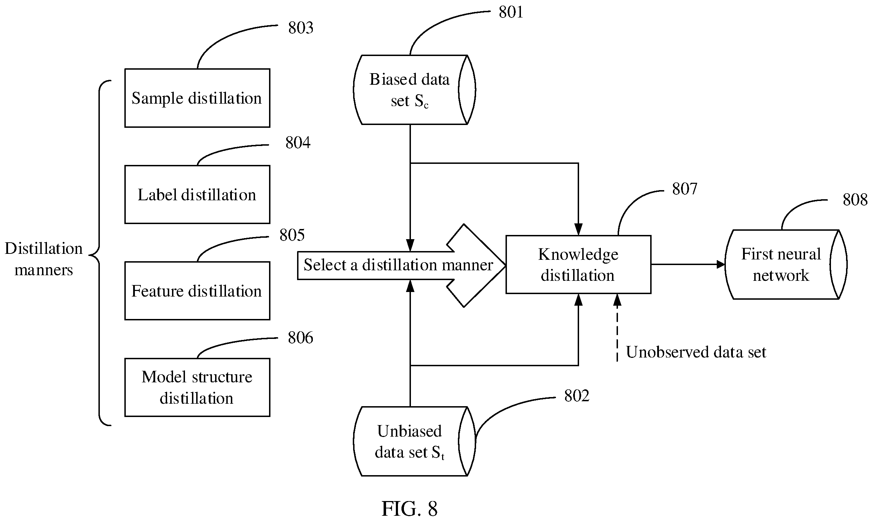

Specifically, for more detailed descriptions of the foregoing plurality of distillation manners, refer to the following description in FIG. 8. Details are not described herein again.

In some possible implementations, a matching distillation manner may be selected as the first distillation manner based on a ratio of a sample quantity of the unbiased data set to a sample quantity of the biased data set, a ratio of positive samples in the unbiased data set to negative samples in the unbiased data set, a ratio of positive samples in the biased data set to negative samples in the biased data set, a quantity of feature dimensions of data included in the unbiased data set and the biased data set, or the like. For example, data types of input features of the samples in the sample set may be different. For example, each data type may be understood as one dimension, and a quantity of feature dimensions is a type of data types included in the sample set.

For example, a manner of selecting a distillation manner may include but is not limited to:

Condition 1: A first ratio of the sample quantity of the unbiased data set to the sample quantity of the biased data set is calculated, and when the first ratio is less than a first threshold, sample distillation is selected as the first distillation manner.

Condition 2: When the first ratio is not less than the first threshold, label distillation is selected as the first distillation manner.

Condition 3: A second ratio of a quantity of the positive samples included in the unbiased data set to a quantity of the negative samples included in the unbiased data set is calculated, and when the second ratio is greater than a second threshold, model structure distillation is selected as the first distillation manner; or a third ratio of a quantity of the positive samples included in the biased data set to a quantity of the negative samples included in the biased data set is calculated, and when the third ratio is greater than a third threshold, model structure distillation is selected as the first distillation manner.

Condition 4: The quantity of feature dimensions included in the unbiased data set and the biased data set is calculated, and when the quantity of feature dimensions is greater than a preset dimension, feature distillation is selected as the first distillation manner.

A priority of each distillation manner may be preset. When the foregoing plurality of conditions are met at the same time, a proper distillation manner may be selected based on the priority. For example, the priority of feature distillation>the priority of model structure distillation>the priority of sample distillation=the priority of label distillation, and when the unbiased data set and the unbiased data set meet both the condition 3 and the condition 4, feature distillation is selected as the first distillation manner.

Certainly, the priority of each distillation manner may be different in different scenarios. This is merely an example for description, and is not used as a limitation herein.

It should be further noted that the teacher model and the student model in this application may be models with different structures, or may be models obtained by using different data sets for models with a same structure. Specifically, adjustment may be performed based on an actual application scenario. This is not limited in this application.

603. Train a first neural network based on the biased data set and the unbiased data set in the first distillation manner, to obtain an updated first neural network.

After the first distillation manner is selected, knowledge distillation may be performed on the first neural network based on a guiding manner included in the first distillation manner, to obtain the updated first neural network.

For ease of understanding, a scenario is used as an example. The unbiased data set acquired by using uniform data is not affected by a preorder model, and meets sample attributes of an expected model, that is, all candidate sets have equal opportunities to be displayed to the user for selection. Therefore, the unbiased data set may be considered as a good unbiased proxy. However, the unbiased data set cannot be directly used to train an online model because of a small sample quantity. In addition, the model trained by using the unbiased data set is more unbiased but has a relatively large variance, and a model trained by using the biased data has a bias but a relatively small variance. Therefore, in this implementation of this application, the unbiased data set and the biased data set are effectively combined for training, to enable the unbiased data set to guide training by using the biased data set, so that a bias degree of a finally obtained output result of the first neural network is lower, and accuracy of the output result of the first neural network is improved.

Specifically, step 603 is described in detail below by using several distillation manners as examples.

I. The first distillation manner is sample distillation.

There may be a plurality of distillation manners based on the samples in the data set. The samples in the biased data set and the unbiased data set include input features and actual labels. The input features of the samples in the unbiased data set may be used as inputs of the teacher model to train the teacher model. The input features of the samples in the biased data set may be used as inputs of the student model, which is the first neural network, to complete knowledge distillation on the first neural network, thereby obtaining the updated first neural network.

In a possible implementation, a specific process of performing knowledge distillation may include: training the first neural network by using the biased data set and the unbiased data set alternately, to obtain the updated first neural network, where in an alternate process, a quantity of batch training times of training the first neural network by using the biased data set and a quantity of batch training times of training the first neural network by using the unbiased data set are in a preset ratio, and the input features of the samples are used as inputs of the first neural network when the first neural network is trained.

Therefore, in this implementation of this application, the first neural network may be trained by using the biased data set and the unbiased data set alternately, and when training is performed by using the unbiased data set, a bias generated when training is performed by using the biased data set may be corrected, so that the bias degree of the finally obtained output result of the first neural network is lower, and the output result is more accurate.

In a possible implementation, when the preset ratio is 1, a difference between a first regularization term and a second regularization term is added to a loss function of the first neural network, the first regularization term is a parameter obtained by training the first neural network by using the samples included in the unbiased data set, and the second regularization term is a parameter obtained by training the first neural network by using the samples included in the biased data set.

Therefore, in this implementation of this application,

In a possible implementation, a specific process of performing knowledge distillation may include: setting a confidence for all or some of the samples in the biased data set, where the confidence is used to represent a bias degree of the samples; and training the first neural network based on the biased data set, the confidence of the samples in the biased data set, and the unbiased data set, to obtain the updated first neural network, where the samples include the input features as inputs of the first neural network when the first neural network is trained.

II. The first distillation manner is label distillation.

A second neural network may be trained by using the unbiased data set, and then prediction labels of the samples in the biased data set are output by using a trained second neural network, and then the prediction labels are used as constraints to train the first neural network, to obtain the updated first neural network.

In a possible implementation, the foregoing sample set further includes an unobserved data set, the unobserved data set includes a plurality of unobserved samples, and a specific process of performing knowledge distillation may include: training the first neural network by using the biased data set, to obtain a trained first neural network; training the second neural network by using the unbiased data set to obtain the updated second neural network; acquiring a plurality of samples from the full sample set, to obtain an auxiliary data set; and updating the trained first neural network by using the auxiliary data set and by using prediction labels of the samples in the auxiliary data set as constraints, to obtain the updated first neural network. Usually, the samples in the auxiliary data set have at least two prediction labels, and the at least two prediction labels are respectively output by the updated first neural network and the updated second neural network.

Therefore, in this implementation of this application, the unobserved data set may be introduced, and bias impact of the biased data set on training of the first neural network is alleviated by using the samples included in the unobserved data set, so that the bias degree of the output result of the updated first neural network is reduced.

In a possible implementation, a specific process of performing knowledge distillation may include: training the second neural network by using the unbiased data set, to obtain the updated second neural network; outputting prediction labels of the samples in the biased data set by using the updated second neural network; performing weighted merging on the prediction labels of the samples and actual labels of the samples, to obtain merged labels of the samples; and training the first neural network by using the merged labels of the samples, to obtain the updated first neural network.

Therefore, in this implementation of this application, the first neural network may be updated by using the labels obtained by merging the prediction labels that are of the samples in the biased data set and that are output by the second neural network and the actual labels of the samples. This may be understood as that the teacher model guides, in a manner of the prediction labels, updating of the first neural network, to reduce the bias degree of the output result of the updated first neural network, thereby improving accuracy of the output result of the updated first neural network.

III. The first distillation manner is feature distillation.

Stable features may be extracted from the unbiased data set, and then the second neural network is trained based on the stable features, to obtain the updated second neural network. Then, the first neural network is trained by using the biased data set, and the updated second neural network is used as the teacher model, the first neural network is used as the student model, and knowledge distillation is performed, to obtain the updated first neural network.

In a possible implementation, a specific process of performing knowledge distillation may include: outputting input features of some samples of the unbiased data set by using a preset algorithm, where the input features of some samples may be understood as the stable features in the unbiased data set, and the preset algorithm may be a DGBR algorithm; training the second neural network based on the input features of some samples, to obtain the updated second neural network; using the updated second neural network as the teacher model, using the first neural network as the student model, and performing knowledge distillation on the first neural network by using the biased data set, to obtain the updated first neural network.

Therefore, in this implementation of this application, the stable feature in the unbiased data set may be used to train the second neural network, to obtain the updated second neural network, that is, the teacher model. Therefore, outputs of the teacher model are more stable and more accurate. On this basis, when knowledge distillation is performed by using the teacher model, outputs of the obtained student model are also more stable and more accurate.

IV. The first distillation manner is model structure distillation.

The second neural network may be trained by using the unbiased data set, to obtain the updated second neural network. Then, the updated neural network is used as the teacher model, the first neural network is used as the student model, and the biased data set and an output result of an intermediate layer of the teacher model are used to perform knowledge distillation on the first neural network, to obtain the updated neural network.

Therefore, in this implementation, the unbiased samples included in the unbiased data set may be used to guide a knowledge distillation process of the first neural network, so that the updated neural network can output an unbiased result, to implement debiasing on input samples, thereby improving output accuracy of the first neural network.

Therefore, in this application, the unbiased samples included in the unbiased data set may be used to guide a knowledge distillation process of the first neural network, so that the updated neural network can output an unbiased result, to implement debiasing on input samples, thereby improving output accuracy of the first neural network. In addition, in the neural network distillation method provided in this application, a distillation manner matching the unbiased data set and the biased data set may be selected. Different distillation manners may adapt to the different scenarios, thereby improving a generalization capability of performing knowledge distillation on the neural network. Different knowledge distillation manners are selected under different conditions, and adaptation is performed based on a size of the data set, a positive to negative ratio, ratios of different data, and other conditions, to maximize efficiency of knowledge distillation.

In a possible implementation, a type of the samples in the unbiased data set is different from a type of the samples in the biased data set. For example, the type of the samples included in the unbiased data set is music, and the type of the samples included in the biased data set is video. Therefore, in this implementation of this application, knowledge distillation may be performed by using data in different domains, to implement cross-domain neural network training and implement cross-domain recommendation for the user, thereby improving user experience.

In a possible implementation, after the updated first neural network is obtained, at least one sample of a target user may be obtained, the at least one sample is used as an input of the updated first neural network, at least one label of the target user is output, and the at least one label is used to construct a user portrait of the target user, where the user portrait is used to describe the target user or recommend a matching sample to the user. For example, an app tapped by a user A may be obtained, the app tapped by the user is used as an input of the updated first neural network, and one or more labels of the user A are output. The one or more labels may be used to indicate a probability of tapping the corresponding app by the user. When the probability exceeds a preset probability, features of the corresponding app may be used as features of the user A, to construct the user portrait of the user A. The features included in the user portrait are used to describe the user, recommend a matching app to the user, or the like.

In this implementation of this application, the updated first neural network may be used to generate the user portrait, so as to describe the user by using the user portrait, or recommend a matching sample to the user by using the user portrait. Because the updated neural network is a neural network on which debiasing is performed, a bias of the output result can be reduced, so that the obtained user portrait is more accurate, and recommendation experience of the user is improved.

The foregoing describes a process of the neural network distillation method provided in this application. The following describes in more detail the neural network distillation method provided in this application with reference to more specific application scenarios.

First, the biased data set 801 and the unbiased data set 802 are obtained.

The preset distillation manners may include sample distillation 803, label distillation 804, feature distillation 805, and model structure distillation 806.

A matching distillation manner is selected from sample distillation 803, label distillation 804, feature distillation 805, and model structure distillation 806 with reference to the biased data set 801 and the unbiased data set 802, and then knowledge distillation 807 is performed to obtain the updated first neural network.

The following describes in detail data and steps in this embodiment of this application.

Specifically, the biased data set 801 may include constructed or acquired samples. For example, the biased data set 801 may be an app tapped or downloaded by the user, music tapped or played by the user, a video tapped or played by the user, or a picture tapped or stored by the user. For ease of understanding, the biased data set is referred to as $S_c$ below.

The unbiased data set may be a data set acquired in a uniform data (uniform data) manner, that is, a plurality of samples are randomly sampled from a candidate set, and then. For example, recommending an app to the user is used as an example. A plurality of apps may be randomly sampled from the candidate set, pictures of the plurality of apps are randomly arranged and displayed in a recommendation interface, and then apps tapped or downloaded by the user are acquired to obtain unbiased samples, to form the unbiased data set. In another example, a scenario of recommending a picture to a user is used as an example. A plurality of pictures may be randomly sampled from the candidate set, thumbnails of the plurality of pictures are randomly arranged and displayed in the recommendation interface, and then pictures tapped or downloaded by the user are acquired, to obtain the unbiased data set. For ease of understanding, the biased data set is referred to as $S_t$ below.

Optionally, $S_c$ and $S_t$ may be data in different domains. For example, $S_c$ may be acquired music tapped or played by the user, and $S_t$ may be a picture, a video, or the like tapped by the user. Therefore, when cross-domain knowledge distillation is subsequently implemented, the first neural network can be enabled to output a prediction result in a domain different from that of input data. For example, in a cross-domain recommendation system, a preference of the user for another type of item may be predicted based on a preference of the user for one type of item, to alleviate a cold start problem in a new application scenario, thereby improving user experience.

After $S_c$ and $S_t$ are obtained, a proper distillation manner is selected from a plurality of distillation manners based on $S_c$ and $S_t$.

For example, the ratio of the sample quantity of $S_t$ to the sample quantity of $S_c$ is calculated. When the ratio occupied by the sample quantity of $S_t$ is relatively small, a variance of a model trained by using $S_t$ is relatively large. A training method is not suitable for label distillation, and is more suitable for sample distillation, that is, sample distillation 803 is selected as the distillation manner. When the ratio occupied by the sample quantity of $S_t$ is relatively large, label distillation 804 is selected as the distillation manner.

In another example, the ratio of the positive samples to the negative samples in $S_t$ is calculated. When the ratio is relatively large, because sample distribution is uneven, an effect of sample distillation or label distillation becomes poor. In this case, model structure distillation may be selected as the distillation manner. Alternatively, the ratio of the positive samples to the negative samples in $S_c$ is calculated. When the ratio is relatively large, because sample distribution is uneven, an effect of sample distillation or label distillation becomes poor. In this case, model structure distillation may be selected as the distillation manner.

In another example, usually, as the quantity of feature dimensions of the samples included in the data set increases, a model finally obtained through training also becomes complex, and an output effect of the model is also improved. Therefore, when the quantity of feature dimensions of the samples included in $S_t$ and $S_c$ is relatively large, feature distillation may be selected, so that the output effect of the finally obtained model is better.

After a proper distillation manner is selected, knowledge distillation may be performed on the first neural network in this distillation manner, to obtain the updated first neural network.

A specific process of distillation by using various distillation manners is described in detail below.

I. Sample distillation

Sample distillation may be performed in a plurality of manners. The following describes several possible implementations by using examples.

1. Causal embedding (causal embedding) policy

A same model may be trained by using $S_c$ and $S_t$ alternately, and a training result of $S_t$ is used to constrain training by using $S_c$.

Specifically, a structure of the first neural network is first selected. The first neural network may be a CNN, an ANN, or the like. Then, the first neural network is trained by using $S_c$ and $S_t$ alternately. For ease of understanding, by using one alternate process as an example, the model obtained through training by using $S_t$ is denoted as $M_t$, and a model obtained through training by using $S_c$ is denoted as $M_c$, where $M_t$ may be understood as the teacher model, and $M_c$ may be understood as the student model.

During training, an objective function may be used to train the first neural network. The objective function not only includes a loss function, but also may include a constraint term, where the constraint term is used to form a constraint on updating of the first neural network, to make parameters of $M_c$ and $M_t$ close to or consistent with each other in the alternate training process. Then, derivative calculation, gradient updating, and the like are performed on a weight parameter and a structural parameter based on a value of the objective function, to obtain an updated parameter, for example, the weight parameter or the structural parameter, to obtain the updated first neural network.

For example, the objective function may be denoted as:

$$\min_{\mathcal{W}_c,\mathcal{W}_t} \frac{1}{|S_c|} \sum_{(i,j)\in S_c} \ell(y_{ij}, \hat{y}_{ij}^c) + \frac{1}{|S_t|} \sum_{(i,j)\in S_t} \ell(y_{ij}, \hat{y}_{ij}^t) + \lambda_c R(\mathcal{W}_c) + \lambda_t R(\mathcal{W}_t) + \lambda_{||t-c||} ||\mathcal{W}_t - \mathcal{W}_c||_F^2$$

where $|S_c|$ and $|S_t|$ respectively represent sample quantities of $S_c$ and $S_t$, $\hat{y}_{ij}^c$ represents an output obtained after $S_c$ is substituted into the first neural network, $\hat{y}_{ij}^t$ represents an output obtained after $S_t$ is substituted into the first neural network, and $\ell(y_{ij}, \hat{y}_{ij}^c)$ and $\ell(y_{ij}, \hat{y}_{ij}^t)$ respectively represent values of the loss function after $S_c$ and $S_t$ are substituted into the first neural network, where the loss function may be a binary cross entropy error loss, an average error loss, or the like. $W_c$ and $W_c$ respectively represent parameters of $S_c$ and $S_t$ models, $R(W_c)$ and $R(W_t)$ respectively represent

regularization terms of the parameters of $S_c$ and $S_t$ models, $\lambda_c$ and $\lambda_t$ respectively represent weight parameters of regularization terms of $M_c$ and $M_t$ models, and $\lambda_{\|t-c\|}$ represents a weight parameter of a square error term of the parameters. In the objective function, not only the loss function for $S_c$ and $S_t$ is included, but also the regularization terms for $S_c$ and $S_t$, and the square error term of the parameters may be further included, to form a constraint when the parameters of the first neural network are subsequently updated, thereby making the parameters of $M_c$ and $M_t$ closer to or more consistent with each other.

Therefore, in this implementation of this application, the first neural network may be trained by using $S_c$ and $S_t$ alternately, to use the model obtained through training by using $S_t$ to guide the model trained by using $S_c$, and complete debiasing on the student model, thereby reducing a bias of the output result of the student model.

2. Delayed combination (delayed combination) policy

A distillation manner of this policy is similar to the foregoing causal embedding policy, and the difference lies in that, during the foregoing causal embedding measurement, alternate training may be performed in a batch training times ratio of 1:1, but in this policy, alternate training may be performed by using a batch training times ratio of s:1, where s is an integer greater than 1. For example, s may be an integer in a range of 1 to 20. The quantity of batch training times may be understood as a quantity of iterations for iterative training on the neural network during each round of training process. Usually, the training process of the neural network is divided into a plurality of epochs, and each epoch includes a plurality of batches, and this batch is batch training. For example, if a data set used for training includes 6000 pictures, and a quantity of pictures used for each epoch of training may be 6000, 600 pictures are used in one batch process, and 100 batches in total are included. To be specific, the quantity of batch training times is 100.

Correspondingly, the objective function of the first neural network may be set to:

$$\begin{cases} \underset{\mathcal{W}_c}{min}\ \dfrac{1}{|S_c|}\sum (i,j) \in S_c \ell\big(y_{ij}, \hat{y}_{ij}^c\big) + \lambda_c R(\mathcal{W}_c) S_c\ step \\[2mm] \underset{\mathcal{W}_t}{min}\ \dfrac{1}{|S_t|}\sum (i,j) \in S_t \ell\big(y_{ij}, \hat{y}_{ij}^t\big) + \lambda_t R(\mathcal{W}_t) S_t\ step \end{cases}$$

where $S_t$ step represents the quantity of batch training times of training the first neural network by using $S_t$, $S_c$ step represents the quantity of batch training times of training the first neural network by using $S_c$, where the ratio may be s:1.

3. Weighted combination (weighted combination) policy

A confidence variable $\alpha_{ij}$ is added to all or some of the samples in $S_c$ and $S_t$, a value range is [0, 1], and $\alpha_{ij}$ is used to indicate a bias degree of the samples.

For example, the objective function used for updating the first neural network may be denoted as:

$$\underset{\mathcal{W}_c, \mathcal{W}_t}{min}\ \frac{\alpha_{ij}}{|S_c|}\sum_{(i,j)\in S_c} \ell\big(y_{ij}, \hat{y}_{ij}^c\big) + \frac{1}{|S_t|}\sum_{(i,j)\in S_t} \ell\big(y_{ij}, \hat{y}_{ij}^t\big) + \lambda_c R(\mathcal{W}_c) + \lambda_t R(\mathcal{W}_t)$$

Usually, the confidence variable of the samples in $S_t$ may be set to 1. A confidence of the samples of $S_c$ is set by using two different mechanisms. In a global mechanism, the confidence is set to a predefined value in [0, 1]; and in a local mechanism, the samples are associated with an independent confidence, and learning is performed in a model training process. The confidence variable is used to constrain $S_c$ when the first neural network is trained by using $S_c$, so that in the process of training the first neural network, the first neural network may be trained by using the samples in $S_c$ and $S_t$ in combination with the confidence of the samples. It may be understood that, the bias degree of the samples in $S_c$ may be reflected by using the confidence variable, so that in a subsequent training process, training performed by using $S_c$ is constrained by using the confidence variable, to implement a debiasing effect, thereby reducing the bias degree of the output result of the updated first neural network.

II. Label distillation

Label distillation is distillation of the student model by using, as a guide, the prediction labels of the samples in the unbiased data set, where the prediction labels are output by the teacher model, and the teacher model is obtained through training based on the unbiased data set.

Specifically, label distillation may also use a plurality of policies, and several possible policies are described by using examples.

### 1. Bridge (Bridge) policy

In this policy, training is performed separately by using $S_c$ and $S_t$, to obtain $M_c$ and $M_t$.

An unobserved data set is introduced, and the unobserved data set includes a plurality of unobserved samples. For example, recommending an app to a user is used as an example. An icon of the app recommended to the user may be displayed in a recommendation interface. An app tapped or downloaded by the user may be understood as the foregoing biased sample, and an app that is not tapped by the user in the recommendation interface is an unobserved sample.

A combination of $S_c$, $S_t$, and the unobserved data set is referred to as a full data set below, and then a plurality of samples are randomly sampled from the full data set, to obtain an auxiliary data set $S_a$. Usually, because of data sparsity, most data in $S_a$ is unobserved samples.

When the first neural network is updated, training may be performed by using $S_a$, to constrain that results of prediction performed by using $M_c$ and $M_t$ on the samples in $S_a$ are the same or similar. The used objective function may include:

$$\min_{\mathcal{W}_c, \mathcal{W}_t} \frac{1}{|S_c|} \sum_{(i,j) \in S_c} \ell(y_{ij}, \hat{y}_{ij}^c) + \frac{1}{|S_t|} \sum_{(i,j) \in S_t} \ell(y_{ij}, \hat{y}_{ij}^t) + \frac{1}{|S_a|} \sum_{(i,j) \in S_a} \ell(\hat{y}_{ij}^{c\prime}, \hat{y}_{ij}^{t\prime}) + \lambda_c R(\mathcal{W}_c) + \lambda_t R(\mathcal{W}_t)$$

where $|S_a|$ represents a sample quantity of the unobserved sample $S_a$ data set, $\ell(\hat{y}_{ij}^c, \hat{y}_{ij}^t)$ represents an error function of prediction labels of samples in $S_a$ on a model trained by using $S_c$ and a model trained by using $S_t$, $\hat{y}_{ij}^c$ represents an output result obtained after $S_a$ is substituted into the first neural network, and $\hat{y}_{ij}^{t\prime}$ represents an output result obtained after $S_a$ is substituted into the second neural network. Therefore, in this policy, the unobserved data set is introduced to perform debiasing, to reduce differences between the $M_c$ model and the $M_t$ model. The error function of the prediction labels of the samples in $S_a$ on the $M_c$ model and the $M_t$ model is introduced into the objective function, to form a constraint on the first neural network, thereby reducing a bias of the output result of the first neural network.

### 2. Refine (Refine) policy

$M_t$ is pre-trained by using $S_t$. Then, $S_c$ is predicted by using $M_t$, to obtain the prediction labels of the samples in $S_c$. Weighted merging is performed on the prediction labels and actual labels of $S_c$; and then $M_c$ is trained by using new labels. It should be noted that, because differences in distribution may exist between the prediction labels and the actual labels of $S_c$, the prediction labels need to be normalized, to reduce the differences between the prediction labels and the actual labels.

Specifically, the objective function used for training the first neural network may be denoted as:

$$\min_{\mathcal{W}_c} \frac{1}{|S_c|} \sum_{(i,j) \in S_c} \ell\left(y_{ij} + \alpha N(\hat{y}_{ij}^t), \hat{y}_{ij}^c\right) + \lambda_c R(\mathcal{W}_c)$$

where $\alpha$ represents a weight coefficient of the prediction labels, $N(\hat{y}_{ij}^t)$ represents normalization processing on the prediction labels $\hat{y}_{ij}^t$, $y_{ij}$ represents the actual labels of the samples in $S_t$, and $\hat{y}_{ij}^t$ represents the prediction labels that are of the samples in $S_c$ and that are output by $M_t$.

### III. Feature distillation

Stable features may be filtered from $S_t$, and then the stable features are used for training to obtain $M_t$, namely, the teacher model, and then $S_c$ is used to train one $M_c$, and $M_t$ is used to perform knowledge distillation on $M_c$, to obtain distilled $M_c$.

For ease of understanding, the stable features may be understood as follows: The neural network is trained by using different data sets, to obtain different neural networks, but differences between output results of the different neural networks are relatively small, and same features in the different data sets may be understood as representative stable features. For example, the representative stable features may be filtered from $S_t$ by using a deep global balancing regression (deep global balancing regression, DGBR) algorithm.

A specific process of performing knowledge distillation on the first neural network in the manner of feature distillation may be, for example, as follows: Samples having stable features may be filtered from $S_t$ by using the DGBR algorithm, then the second neural network is trained based on the samples having the stable features, and the trained second neural network is used as the teacher model, the first neural network is used as the student model, the first neural network is trained by using $S_c$, and knowledge distillation is performed on the first neural network, to obtain the updated first neural network. Specifically, for example, a correspondence between some neural network layers in the student model and the teacher model is determined. It should be noted that, the correspondence herein means that relative locations of the neural network layers in the student model and the teacher model are the same or similar. For example, if the student model and the teacher model are networks of different types, and quantities of neural network layers included in the student model and the teacher model are the same, in this case, a first neural network layer in the student model is an $N^{th}$ layer starting from an input layer, and a second neural network layer in the teacher model is an $N^{th}$ layer starting from an input layer. In this case, the first neural network layer and the second neural network layer are neural network layers having a correspondence. The neural network layer may include an intermediate layer and an output layer. During knowledge distillation, the student model and the teacher model separately process data to be processed, and construct a loss function by using outputs of the neural network layers having a correspondence, and knowledge distillation is performed on the student model by using the loss function, until a preset condition is met. In this case, when the student model and the teacher model process, after knowledge distillation, same data to be processed, the outputs of the neural network layers having the correspondence are similar or the same. In this way, the student model after knowledge distillation can have a data processing capability the same as or similar to that of the teacher model. Using the foregoing first neural network layer and the second neural network layer as an example, when the student model and the teacher model process, after knowledge distillation, same data to be processed, the outputs of the first neural network layer and the second neural network layer are similar. Because there may be a plurality of neural network layers having a correspondence, some or all of the neural network layers in the student model and the teacher model have the same or similar data processing capability after knowledge distillation, and further, the student model and the teacher model have the same or similar data processing capability after knowledge distillation.

Therefore, in this distillation manner, the stable features may be used for training, to obtain the teacher model, to distill the student model by using the teacher model obtained through training based on the stable features, so that the subsequently obtained student model can also output an unbiased result or a result with a relatively low bias under guidance of the teacher model.

IV. Model structure distillation

In this distillation manner, training may be performed by using $S_t$ to obtain $M_t$. Then, an output result of an intermediate layer of $M_t$ is used to guide training of $M_c$.

For example, to align feature embedding (feature embedding) of $M_t$ and $M_c$, training is performed on $S_t$ to obtain feature embedding of $M_t$, and then the feature embedding is used as an initializing value of a variable of $M_c$. Training is performed on $S_c$ to obtain feature embedding, the feature embedding is used to perform random initialization on the variable of $M_c$, then weighted operation is performed on the initializing value and a value of random initialization, and $M_c$ is trained by using a result of the weighted operation, to obtain trained $M_c$.

In another example, Hint layers (one or more, and network layer indexes corresponding to $M_c$ and $M_t$ may not need to be kept consistent) that need to be aligned may be selected from $M_c$ and $M_t$ for pairing, and then a pairing term is added to an objective function of $M_c$, where the pairing term may be denoted as $\alpha * y_t + (1 - \alpha) * y_c, \alpha \in (0.5, 1)$, $y_t$ represents an output result of the Hint layer of $M_t$, $y_c$ represents an output result of the Hint layer of $M_c$, and $\alpha$ represents a ratio occupied by $y_t$.

In another example, a temperature variable and softmax operation may be introduced to obtain a soft label predicted by $M_t$, that is, a label output by a network layer previous to a softmax layer of $M_t$, and then in a process of training $M_c$, a label output by a network layer previous to a softmax layer of $M_c$ is constrained to be the same as or close to the label output by the network layer previous to the softmax layer of $M_t$. For example, the corresponding pairing term may be added to the objective function of $M_c$, where the pairing term may be denoted as $\omega * y_t + (1 - \omega) * y_c, \omega \in (0.5, 1)$, $y_t$ represents the output result of the network layer previous to the softmax layer of $M_t$, $y_c$ represents the output result of the network layer previous to the softmax layer of $M_c$, and $\omega$ represents the ratio occupied by $y_t$.

Therefore, in this distillation manner, the intermediate layer of the teacher model may be used to guide training of the intermediate layer of the student model. Because the teacher model is obtained through training by using the unbiased data set, in a process of guiding the student model, the teacher model forms a constraint on the output result of the student model, to reduce a bias of the output result of the student model, thereby improving accuracy of the output result of the student model.

After knowledge distillation is performed in one of the foregoing manners to obtain the updated first neural network, subsequent prediction may be performed by using the first neural network. For example, this may be applied to a recommendation scenario, to recommend music, a video, an image, or the like to a user.

The foregoing describes in detail the process of the neural network distillation method provided in this application. The following describes, by using examples, application scenarios of the neural network distillation method provided in this application with reference to the foregoing process.

For example, a "lifelong learning project" for a user may be established. Based on historical data of the user in domains such as videos, music, and news, a cognitive brain is constructed by using various models and algorithms and by simulating a human brain mechanism, to build a lifelong learning system framework of the user.

The lifelong learning project is, for example, divided into four stages: learning by using the historical data of the user (the first stage), monitoring real-time data of the user (the second stage), predicting future data of the user (the third stage), and making decisions for the user (the fourth stage). The neural network distillation method provided in this application may be applied to the first stage, the third stage, or the fourth stage.

For example, data of the user (including information such as short message service messages, photos, and email events on the terminal side) may be obtained based on multi-domain platforms such as a music app, a video app, and a browser app. In one aspect, a user portrait is constructed by using the obtained data, and in a further aspect, learning and memory modules based on user information filtering, association analysis, cross-domain recommendation, causal inference, and the like are implemented, to construct a personal knowledge graph of the user.

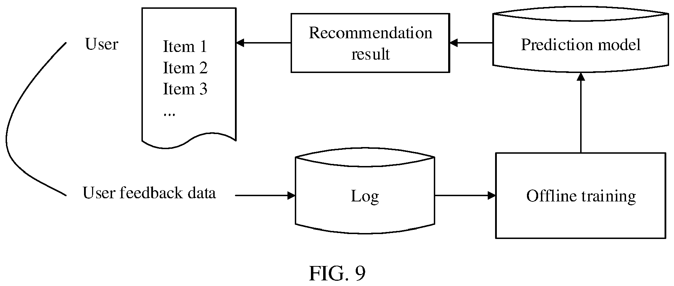

For example, as shown in FIG. 9, if a user accesses an interface of a recommendation system, a recommendation request is triggered, the recommendation system inputs the request and information about the request into a prediction model, and then predicts click-through rates of the user on products in the system. Next, the products are sorted in descending order based on the predicted click-through rates or a function based on the click-through rates. The recommendation system displays the products at different locations in sequence as a recommendation result for the user. The user browses the different locations and performs a user behavior, such as browsing or tapping to download. At the same time, an actual behavior of the user is stored in a log as training data, and parameters of the prediction model are continuously updated through offline training, to improve a prediction effect of the model. This application corresponds to offline training of the recommendation system, and at the same time, prediction logic of the prediction model is changed. Specifically, for example, when the user opens a mobile phone browser app, a recommendation module of a browser can be triggered. The recommendation module of the browser predicts, based on a historical download record of the user, a click record of the user, features of the application, and environmental feature information such as a time and a location, a possibility of downloading each given candidate news/article by the user. Based on a calculation result, the browser performs displaying in sequence based on the possibilities, to increase an application download probability. Specifically, news that is more likely to be downloaded is ranked at a forward location and news that is less likely to be downloaded is ranked at a backward location. The behavior of the user is also stored in the log, and the parameters of the prediction model are trained and updated through offline training.

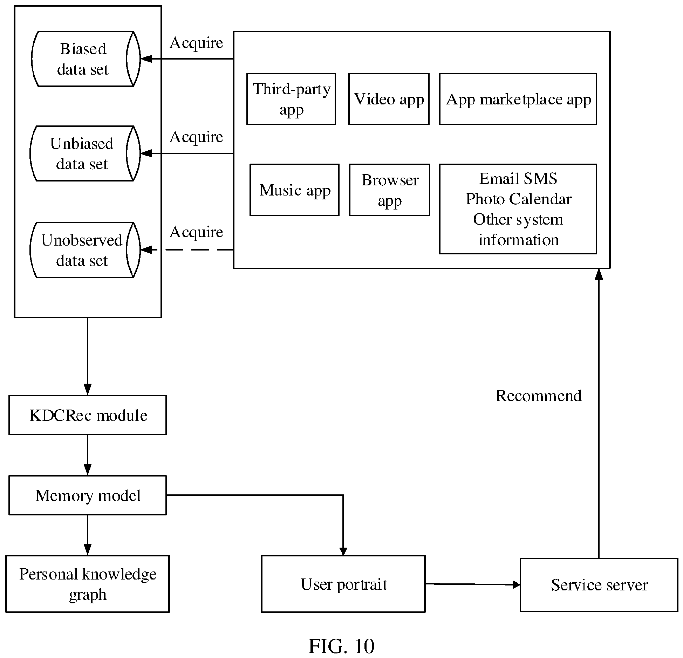

More specifically, the neural network distillation method provided in this application may be introduced into lifelong learning. By using a recommendation system applied to a terminal as an example, FIG. 10 is a schematic diagram of a framework of a recommendation system according to this application. Various apps, such as a third-party app, a video app, a music app, a browser app, or an app marketplace app, or short message service message, email, photo, calendar, or a system app of another terminal, are installed on the terminal. When the user uses the app installed on the terminal, data generated when the user uses the app may be acquired, to obtain user behavior data, for example, information such as a short message service message, a photo, an email event, a video, and a browsing record. Certainly, before the data of the app is acquired, an acquisition permission may be obtained, to ensure privacy of the user.

Both the unbiased data set and the biased data set may be obtained through the foregoing app acquisition. For example, when the unbiased data set is acquired, recommending an app in an app marketplace is used as an example. Some apps may be randomly sampled from an app candidate set, for recommendation to the user, and icons of the apps obtained through sampling are randomly displayed in the recommendation interface, and then information about apps tapped by the user is obtained. In another example, using the music app as an example, some pieces of music may be randomly sampled from a music candidate set, and then information about the music obtained through sampling, for example, information about a music title and a singer, is randomly displayed in a recommendation interface, and then information about music tapped by the user is obtained. For example, when the biased data set is acquired, the biased data set may be obtained by recommending, to the user according to a preset recommendation rule, for example, an app, music, or a video that has a higher association degree with a label of the user, and acquiring music, an app, or a video that is already tapped or downloaded by the user.

Optionally, an unobserved data set may be further acquired. For example, if 100 apps are selected for recommendation, and icons of only 10 apps are displayed in the recommendation interface, the remaining 90 apps are unobserved samples.

After the unbiased data set and the biased data set are acquired, knowledge distillation can be performed by using the unbiased data set and the biased data set. To be specific, the unbiased data set and the biased data set are input into a knowledge distillation counterfactual recommend (knowledge distillation counterfactual recommend, KDCRec) module shown in FIG. 10, to perform knowledge distillation, thereby obtaining the trained first neural network, namely, a memory model shown in FIG. 10. For a process of knowledge distillation, refer to the foregoing description of FIG. 8. Details are not described herein again. Optionally, knowledge distillation may alternatively be performed with reference to the unobserved data set. Refer to the related description of label distillation 804 in FIG. 8. Details are not described herein again. Therefore, in a process of knowledge distillation, the neural network distillation method provided in this application may be used to correct a bias problem of historical data of the user (including a location bias, a selection bias, a popularity bias, and the like) to obtain real data distribution of the user.

After the memory model is obtained, one or more prediction labels corresponding to the user may be output by using the memory model, where the one or more labels are used to construct. For example, the label may be used to indicate a probability of tapping an app by the user. When the probability is greater than a preset probability value, features of a sample corresponding to the label may be added to a user image as features of the user. A label included in the user portrait is used to describe the user, for example, an app type or a music type preferred by the user.

Optionally, feature knowledge based data, knowledge-inferable data, and the like of the user may be further output. To be specific, user features are mined by using technologies such as association analysis, cross-domain learning, and causal inference, and knowledge-based inference and presentation are implemented by using an external general knowledge graph. Features based on general knowledge are extended and input into an enhanced user portrait module to enhance the user portrait in a visual and dynamic manner.

Then, a service server may determine, based on the enhanced user portrait, information such as music, an app, or a video to be recommended to the user, to complete accurate recommendation for the user, thereby improving user experience.

It may be understood that, this application provides a generalized knowledge distillation based counterfactual learning method, to implement unbiased cross-domain recommendation, and construct an unbiased user portrait system and an unbiased personal knowledge graph. Experiments conducted on this application include cross-domain recommendation, interest mining based on causal inference, and construction of a user portrait system. Results of offline experiments are as follows: In the user portrait, a gender-based prediction algorithm improves the accuracy by over 3% compared with baseline accuracy, an age multi-classification task improves the accuracy by almost 8% compared with the baseline accuracy, and the introduction of counterfactual causal learning reduces a variance of the accuracy of each age group by 50%. The user interest mining based on counterfactual causal inference replaces an association rule learning based algorithm, to effectively reduce an effective action set of the user, and provide interpretability for a preference label of the user.

For example, using an app marketplace as an example, a plurality of ranking lists may be displayed in a recommendation interface of the app marketplace, a click probability of the user on a candidate product is predicted based on user features, features of the candidate set product, and context features, and the candidate products are sorted in descending order in sequence based on the probabilities, and an application that is most likely to be downloaded is ranked at the most forward location. After viewing the recommendation result of the app marketplace, the user selects an operation such as browsing, tapping, or downloading based on personal interest, and these user behaviors are stored in logs.

These accumulated user behavior logs are used as training data to train a click-through rate prediction model. When the click-through rate prediction model is trained offline, the user behavior logs need to be used. However, the acquired user data has problems such as a location bias and a selection bias. To eliminate impact of these biases on the click-through rate prediction model, uniform data uniform data is introduced, and a proper distillation manner is selected from 803 to 806 in FIG. 8 with reference to a decision mechanism module 101 provided in the present invention, to train the recommendation model, that is, the first neural network in combination with user log data, that is, biased data. A label distillation based counterfactual technology has an 8.7% improvement compared with a baseline in the area under the receiver operating characteristic curve (the area under the roc curve, AUC), and a sample distillation based counterfactual causal learning technology has a 6% improvement compared with the baseline. A model structure distillation based counterfactual causal learning technology has a 5% improvement compared with the baseline.

The foregoing describes in detail the process and application scenarios of the neural network distillation method provided in this application. The first neural network obtained by using the foregoing method may be applied to a recommendation scenario. The following describes in detail a recommendation method provided in this application with reference to the foregoing method.

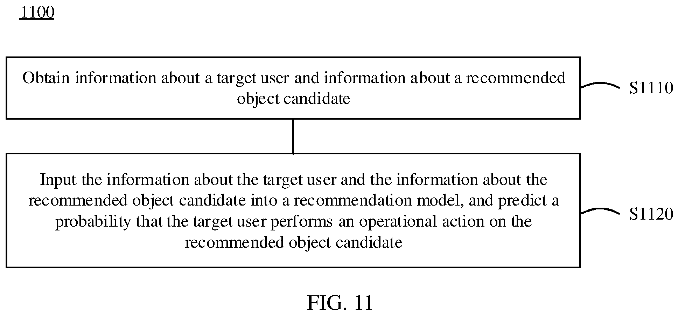

FIG. 11 is a schematic diagram of a recommendation method 1100 according to an embodiment of this application. The method shown in FIG. 11 may be performed by a recommendation apparatus. The apparatus may be a cloud service device, or may be a terminal device, for example, may be an apparatus whose operational capability is sufficient for performing the recommendation method, such as a computer or a server, or may be a system including a cloud service device and a terminal device. For example, the method 1100 may be performed by the execution device 210 in FIG. 2 or FIG. 5 or the local device in FIG. 5.

For example, the method 1100 may be specifically performed by the execution device 210 shown in FIG. 3, and a target user and a recommended object candidate in the method 1100 may be data in the database 230 shown in FIG. 3.

The method 1100 includes step S 1110 and step S1120. The following describes step 1110 and step 1120 in detail.

S1110: Obtain information about the target user and information about the recommended object candidate.

For example, when a user enters a recommendation system, a recommendation request is triggered. The recommendation system may use the user who triggers the recommendation request as the target user, and use the recommended object that can be displayed to the user in the recommendation system as the recommended object candidate.

For example, the information about the target user may include an identifier of the user, for example, a target user ID, and the information about the target user may further include some personalized attribute information of the user, for example, gender of the target user, age of the target user, occupation of the target user, income of the target recommended user, hobbies of the target user, or education of the target user.

For example, the information about the recommended object candidate may include an identifier of the recommended object candidate, for example, an ID of the recommended object candidate. The information about the recommended object candidate may further include some attributes of the recommended object candidate, for example, a name of the recommended object candidate or a type of the recommended object candidate.

S1120: Input the information about the target user and the information about the recommended object candidate into a recommendation model, and predict a probability that the target user performs an operational action on the recommended object candidate.

The recommendation model is the updated first neural network obtained in FIG. 6. For ease of understanding, the updated first neural network is referred to as the recommendation model below. For a manner of training the recommendation model, refer to related descriptions in the foregoing steps 601 to 603. Details are not described herein again.

For example, recommended object candidates in the candidate recommendation set may be ranked based on predicted probabilities that the target user performs an operational action on the recommended object candidates, to obtain a recommendation result of the recommended object candidates. For example, a recommended object candidate with a highest probability is selected and displayed to the user. For example, the recommended object candidate may be a candidate recommended application.

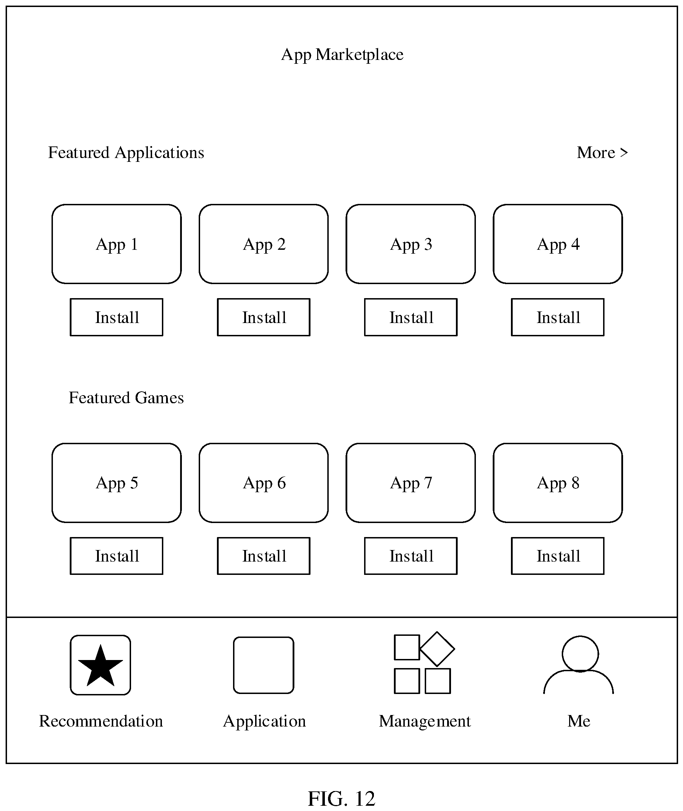

FIG. 12 shows a "Recommendation" page in an app marketplace. There may be a plurality of ranking lists on the page. For example, the ranking lists may include a ranking list of high-quality applications and a ranking list of featured games. The featured games are used as an example. A recommendation system of the app marketplace predicts, based on information about a user and information about candidate recommended applications, probabilities that the user downloads (installs) the candidate recommended applications, ranks the candidate recommended applications in descending order of the probabilities, and places, in the first place, an application that is most likely to be downloaded.

For example, a recommendation result of the high-quality applications may be that an app 5 is located at a recommendation location 1 in the featured games, an app 6 is located at a recommendation location 2 in the featured games, an app 7 is located at a recommendation location 3 in the featured games, and an app 8 is located at a recommendation location 4 in the featured games. After the user sees the recommendation result in the app marketplace, the user may perform an operational action on the recommendation result based on interests of the user. After being performed, the operational action of the user is stored in a user behavior log.

An app marketplace shown in FIG. 12 may obtain training data by using user behavior logs to train the recommendation model.

It should be understood that the foregoing example descriptions are intended to help a person skilled in the art understand embodiments of this application, but are not intended to limit embodiments of this application to a specific value or a specific scenario in the examples. A person skilled in the art definitely can make various equivalent modifications or changes according to the examples described above, and such modifications or changes also fall within the scope of embodiments of this application.

The recommendation model is obtained by training a first neural network by using a biased data set and an unbiased data set in a sample set in a first distillation manner, the biased data set includes biased samples, the unbiased data set includes unbiased samples, the first distillation manner is determined based on data features of the sample set, the samples in the biased data set include information about a first user, information about a first recommended object, and actual labels, the actual labels of the samples in the unbiased data set are used to represent whether the first user performs an operational action on the first recommended object, the samples in the unbiased data set include information about a second user, information about a second recommended object, and actual labels, and the actual labels of the samples in the unbiased data set are used to represent whether the second user performs an operational action on the second recommended object.

In a possible implementation, the unbiased data set is obtained when the recommended object candidate in a recommended object candidate set is displayed at a same probability, and the second recommended object is a recommended object candidate in the recommended object candidate set.

In a possible implementation, that the unbiased data set is obtained when the recommended object candidate in a recommended object candidate set is displayed at a same probability may include: The samples in the unbiased data set are obtained when the recommended object candidate in the recommended object candidate set is randomly displayed to the second user; or the samples in the unbiased data set are obtained when the second user searches for the second recommended object.

In a possible implementation, the samples in the unbiased data set are data in a source domain, and the samples in the biased data set are data in a target domain.

It may be understood that the method corresponding to FIG. 6 is a training stage of the recommendation model (an execution stage of the training module 202 shown in FIG. 3). Specifically, the training is performed by using the updated first neural network provided in the method corresponding to FIG. 6, that is, the recommendation model. The method corresponding to FIG. 11 may be understood as an application stage of the recommendation model (an execution stage of the execution device 210 shown in FIG. 3). Specifically, this may be reflected as follows: The obtained recommendation model is trained by using the method corresponding to FIG. 6, to obtain an output result, that is, a probability that the target user performs an operation on the recommended object candidate, based on the information about the target user and the information about the recommended object candidate.

The following uses three examples (example 1, example 2, and example 3) to describe how the solution in this embodiment of this application is applied to different scenarios. It should be understood that the recommendation model training method described below may be considered as a specific implementation of the method corresponding to FIG. 6. The recommendation method described below may be considered as a specific implementation of FIG. 11. To avoid unnecessary repetition, repeated descriptions are properly omitted in the following description of the three examples in this embodiment of this application.

Example 1:

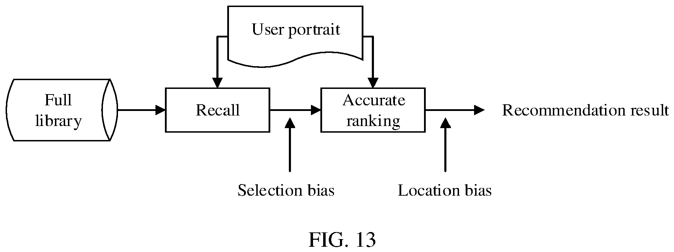

As shown in FIG. 13, for each recommendation request, a recommendation system usually needs to perform, based on a user portrait, a plurality of processes such as recall or accurate ranking, or a manual rule on all items in a full library to generate a final recommendation result, and then displays the final recommendation result to the user. A quantity of items recommended to the user is far less than a total quantity of items, and a plurality of bias problems, such as a location bias and a selection bias, are introduced in this process.

A user portrait refers to a label set of personalized user preferences. For example, the user portrait may be generated based on an interaction history of the user.

The selection bias means that acquired data has a bias due to an item display probability difference. Ideal training data is obtained when products are displayed to the user at a same display probability. In reality, due to a limitation on a quantity of display locations, not all the items can be displayed. The recommendation system usually recommends items to the user based on predicted selection rates of the user for the items. The user can only interact with the displayed items, and an item that has no opportunity of being displayed cannot be selected, that is, cannot participate in interaction. As a result, opportunities of displaying the items are different. In the entire recommendation process, for example, in the plurality of processes such as recall and accurate ranking, a truncation operation occurs. To be specific, some recommended objects are selected from the recommended object candidates for display.

The location bias means that acquired data has a bias due to an item display location difference. The recommendation system usually displays recommendation results in a sequence from top to bottom or from left to right. Based on browsing habits of people, the forward items are easier to see, and have a higher rate of being selected by users. For example, in a ranking list in an app marketplace, a same application (application, app) may be displayed in the first place, or may be displayed in the last place. According to a random launch policy, it can be verified that a download rate of the app when displayed in the first place is far higher than a download rate of the app when displayed in the last place. As shown in FIG. 13, when an accurate ranking process is performed, a difference in a display location of the item is caused. Consequently, a location bias is introduced.

Due to the existence of the bias problem, an item with a higher display opportunity has a higher probability of being selected by the user, and a higher probability of being selected by the user indicates a higher probability of being recommended to the user in subsequent recommendation, and further the item obtains more display opportunities, and is easily tapped by another user. This aggravates impact of the bias problem, and causes the Matthew effect, which leads to aggravation of a long tail problem. The long tail problem causes an overwhelming majority of personalized requirements of a small group to fail to be satisfied, affecting user experience. In addition, many items in the recommendation system cannot generate actual commercial value due to lack of an exposure opportunity, and storage resources and computing resources are consumed, causing a waste of resources.

Example 2:

A lifelong learning project is a project of constructing, based on historical data of the user in a plurality of domains such as videos, music, and news, a cognitive brain by using various models and algorithms and by simulating a human brain mechanism, to achieve an objective of lifelong learning.

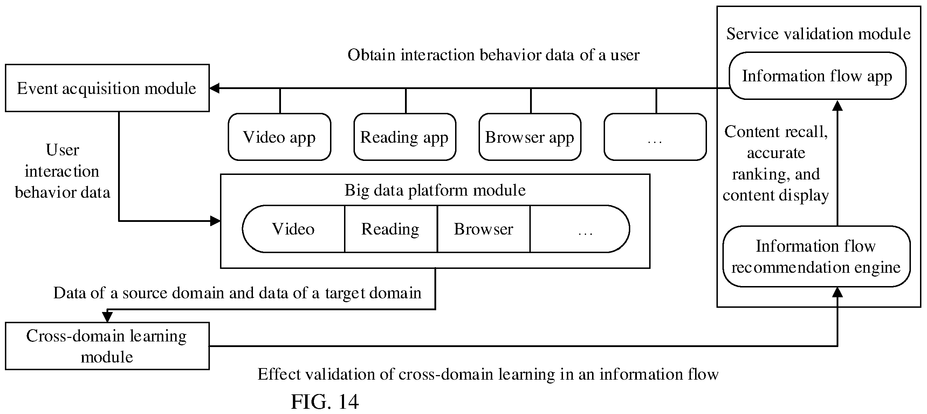

FIG. 14 is a schematic diagram of a lifelong learning framework. The framework includes a plurality of recommendation scenarios, such as a video app, a reading app, and a browser app. A conventional recommendation learning scheme is to learn, in each recommendation scenario or, in other words, in each domain, hidden laws of historical behaviors of the user in the domain, and then perform recommendation based on the learned laws. Knowledge migration and sharing between domains are not considered at all in the entire learning and implementation process.

However, at an early stage of appearance of a new recommendation scenario, an interaction history of the user is deficient. It is difficult to find the hidden laws in the historical behaviors of the user based on the recommendation model obtained through learning based only on the interaction history in this domain, and further, a prediction result is inaccurate. That is, there is a cold start problem in the new recommendation scenario.

Cross-domain recommendation is a recommendation method for learning preferences of the user in a source domain and applying the preferences to a target domain. Through cross-domain recommendation, laws learned in the source domain can be used to guide a recommendation result in the target domain, and the knowledge migration and sharing between domains can be implemented, to resolve the cold start problem.

For example, a preference of the user for music and videos is predicted based on a reading preference of the user in the recommendation scenario of the reading app, to resolve a cold start problem of the user in the recommendation scenario of the music app.

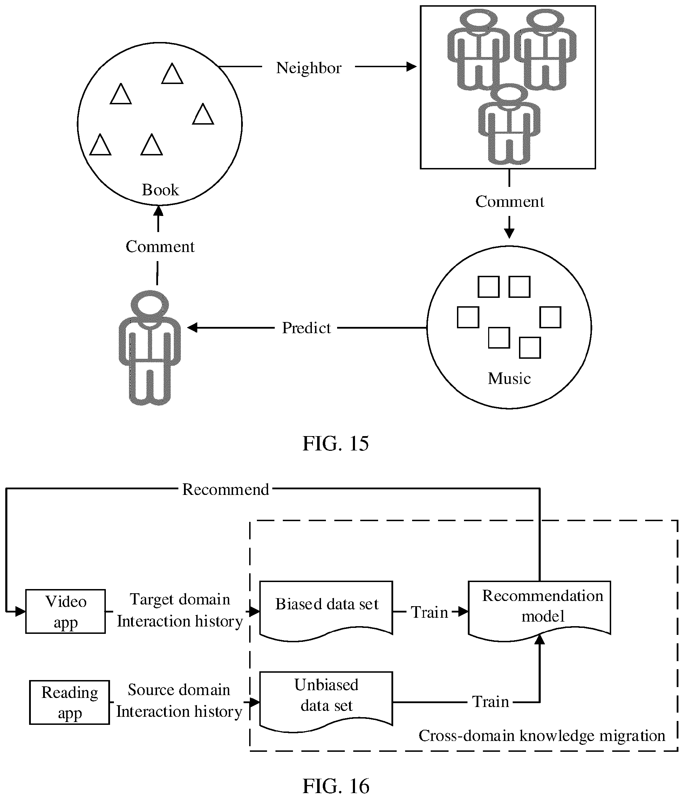

As shown in FIG. 15, in the recommendation scenario of the reading app, a book is recommended to a user A, and an interest preference of the user A in the recommendation scenario of the reading app may be learned based on historical interaction data of the user A. A neighbor user having the same interest as the user A may be determined based on the interest preference of the user A in the recommendation scenario of the reading app. In the recommendation scenario of the music app, music is recommended to the user, and an interest preference of a neighbor user in the recommendation scenario of the music app is learned based on historical interaction data of the neighbor user in the recommendation scenario of the music app. Then, a recommendation result is provided for the user A in the recommendation scenario of the music app under guidance based on the learned interest preference. The recommendation scenario of the reading app is the source domain, and the recommendation scenario of the music app is the target domain. However, data distribution of the source domain and data distribution of the target domain are usually inconsistent. Then, the data distribution of the source domain is biased relative to the data distribution of the target domain. When cross-domain recommendation is implemented directly in the foregoing manner such as rule association leads to the introduction of a bias in the learning process. The model performs recommendation by giving more consideration to the interest preference of the user in the source domain. In other words, the model obtained through training is biased. As a result, the model that learns from the data of the source domain cannot be effectively generalized in the target domain, and the model has a risk of distortion.

Example 3:

An implementation of step S 1110 is described below by using an example in which a recommendation scenario of a reading app is used as the source domain and a recommendation scenario of a video app is used as the target domain.

The recommendation scenario of the reading app is a recommendation scenario of recommending a book to the user. The recommendation scenario of the video app is a recommendation scenario of recommending a video to the user.

As shown in FIG. 16, biased samples are obtained based on a user interaction history in the recommendation scenario of the video app (the target domain).

Table 1 shows data obtained based on the user interaction history (for example, user behavior logs) in the recommendation scenario of the video app.

**Table 1**

| Label | User ID | Video ID. | Label | Producer | Actor | Score |
|-------|---------|-----------|-------|----------|-------|-------|
| 1 | 13718bbd | 5316a17f | Thriller | No. 1 producer | Zhang San | 6.8 |

(continued)

| Label | User ID | Video ID. | Label | Producer | Actor | Score |
|---|---|---|---|---|---|---|
| 0 | 0b153874 | 93bad2c0 | Art | No. 2 producer | Li Si | 7.1 |
| ... | ... | ... | ... | ... | ... | ... |

One row in Table 1 is one sample. For example, the training sample is a biased sample, and the biased sample includes information about a first user and information about a first recommended object. The information about the first user includes an ID of the first user. The first recommended object is a video. The information about the first recommended object includes an ID of the first recommended object, a label of the first recommended object, a producer of the first recommended object, an actor of the first recommended object, and a score of the first recommended object. In other words, the biased sample includes six types of features in total.

It should be understood that Table 1 is merely an example, and the user information and information corresponding to recommendation may further include information with more or fewer items than Table 1, or more or fewer types of feature information than Table 1.

Further, processed data is stored in a libSVM format. For example, the data in Table 1 may be stored in the following form:

```
1    25173:1    38553:1    50053:1    50216:1    59109:1    98079:1
0    19468:1    19850:1    79800:1    81901:1    85533:1    13010:1
```

Based on the foregoing data, n biased samples can be obtained to form a biased data set.

As shown in FIG. 16, unbiased samples are obtained based on a user interaction history in the recommendation scenario of the reading app (the source domain). It should be noted that FIG. 16 is merely an example. Data in the source domain may further include data of another recommendation scenario, or may include data of a plurality of recommendation scenarios. For example, the data in the source domain may include user historical data in the recommendation scenario of the reading app and user historical data in the recommendation scenario of the music app.

It should be understood that FIG. 16 is merely an example, and the unbiased samples may not be used as data in a validation set.

Table 2 shows data obtained based on the user interaction history (for example, user behavior logs) in the recommendation scenario of the reading app.

**Table 2**

| Label | User ID | Book ID | Label | Publisher | Author | Score |
|---|---|---|---|---|---|---|
| 1 | 25c83c98 | 68fd1e64 | Suspense | No. 1 publishing house | Zhang San | 6.8 |
| 0 | efea433b | 0b153874 | Art | No. 2 publishing house | Li Si | 7.1 |
| ... | ... | ... | ... | ... | ... | ... |

One row in Table 2 is one training sample. The sample is an unbiased sample, and the unbiased sample includes information about a second user and information about a second recommended object. The information about the second user includes an ID of the second user. The second recommended object is a book. The information about the second recommended object includes an ID of the second recommended object, a label of the second recommended object, a publishing house of the second recommended object, an author of the second recommended object, and a score of the second recommended object. In other words, the unbiased sample includes six types of features in total.

It should be understood that Table 2 is merely an example, and the user information and information corresponding to recommendation may further include information with more or fewer items than Table 2, or more or fewer types of feature information than Table 2.

Further, processed data is stored in a libSVM format. For example, the data in Table 2 may be stored in the following form:

```
1    77891:1    81901:1    82101:1    83267:1    83896:1    91899:1
0    55060:1    59115:1    60857:1    75847:1    97576:1    42803:1
```

The recommendation model may be applied to the target domain, for example, the recommendation scenario of the video app in FIG. 16.

Compared with the recommendation scenario of the video app, interaction data of the user in the recommendation scenario of the reading app is richer, and data distribution can more accurately reflect a preference of the user. Based on intuitive inference and interoperability between the interest of the user in the reading scenario and the interest of the user in the video scenario, by using the solution in this embodiment of this application, the recommendation model can better grasp the personalized preference of the user in the reading scenario, and further guide a recommendation result in the video scenario, thereby improving accuracy of the recommendation result.

Migration and sharing of knowledge (for example, the interest preference of the user) are performed between different domains, and historical user interaction records in both the source domain (for example, the recommendation scenario of the reading app) and the target domain (for example, the recommendation scenario of the video app) are both incorporated into learning, so that the model obtained through training has a relatively good assessment result in the source domain. In this case, the model obtained through training well captures the interest preference of the user in the source domain, and in the approximate recommendation scenario, the interest preference of the user is similar. Therefore, the recommendation model can also well fit the interest preference of the user in the target domain, and recommend a recommendation result that matches the interest of the user to the user, to implement cross-domain recommendation, thereby alleviating the cold start problem.

The recommendation model may predict, in the target domain, a probability that the user performs an operational action on a recommended object, that is, predict a probability that the user selects the recommended object. A target recommendation model is deployed in the target domain (for example, in the recommendation scenario of the video app), and the recommendation system may determine, based on an output of the target recommendation model, a recommendation result and display the recommendation result to the user.

As described above, the conventional recommendation learning scheme is to learn, in each recommendation scenario or, in other words, in each domain, hidden laws of historical behaviors of the user in the domain, and then perform recommendation based on the learned laws. Knowledge migration and sharing between domains are not considered at all in the entire learning and implementation process.

Currently, many electronic devices, such as a mobile phone and a tablet computer, have a plurality of applications, and each application may be considered as one application scenario. When an application performs recommendation for the user, the application usually learns a preference of the user based only on interaction data of the user in the application, and further performs recommendation for the user, without considering interaction data of the user in another application.

However, in an application just downloaded by the user, interaction data of the user is deficient. It is difficult to find the hidden laws in the historical behaviors of the user based on the recommendation model obtained through learning based only on the interaction history in this domain, and further, a prediction result is inaccurate, affecting user experience. That is, there is a cold start problem in the new recommendation scenario.

Embodiments of this application provide a recommendation method and an electronic device. A preference of a user in another domain may be learned, to perform recommendation for the user, thereby improving accuracy of a prediction result and improving user experience.

It should be understood that in this embodiment of this application, it may be considered that "user behavior data", "user interaction data", "interaction data", "behavior data", and the like express a same meaning, and may all be understood as data related to an operation behavior of the user when a recommended object is displayed to the user.

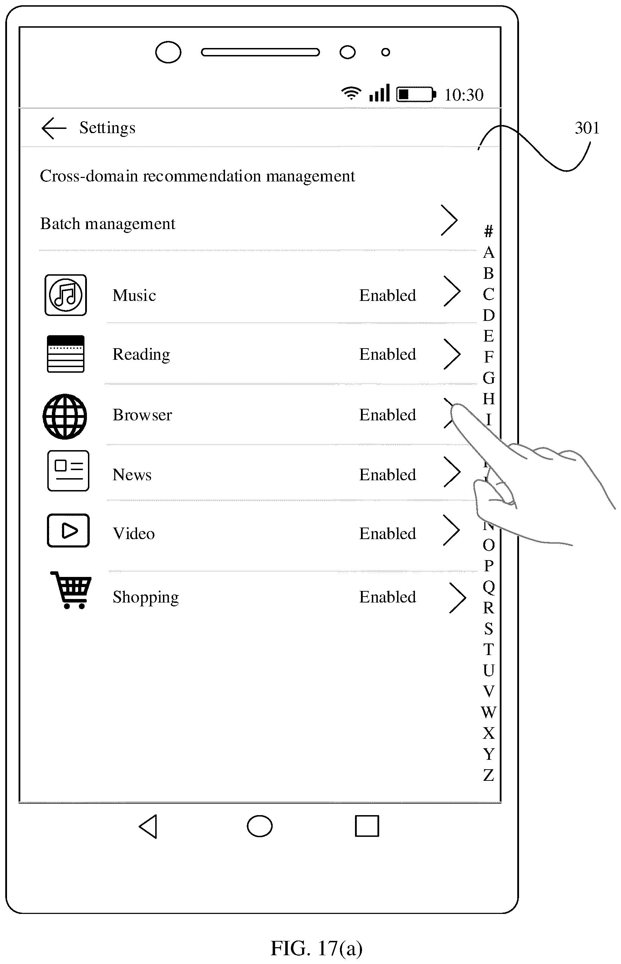

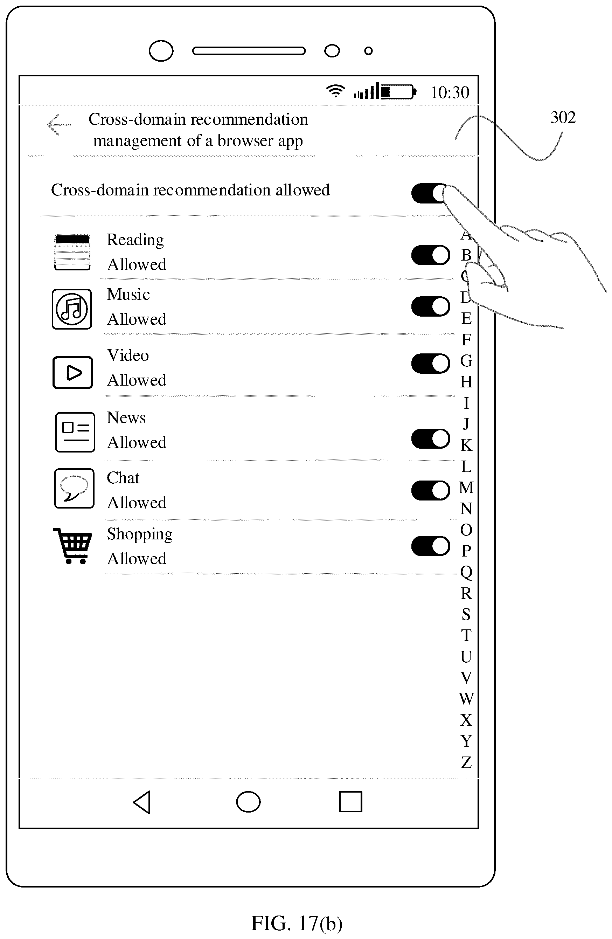

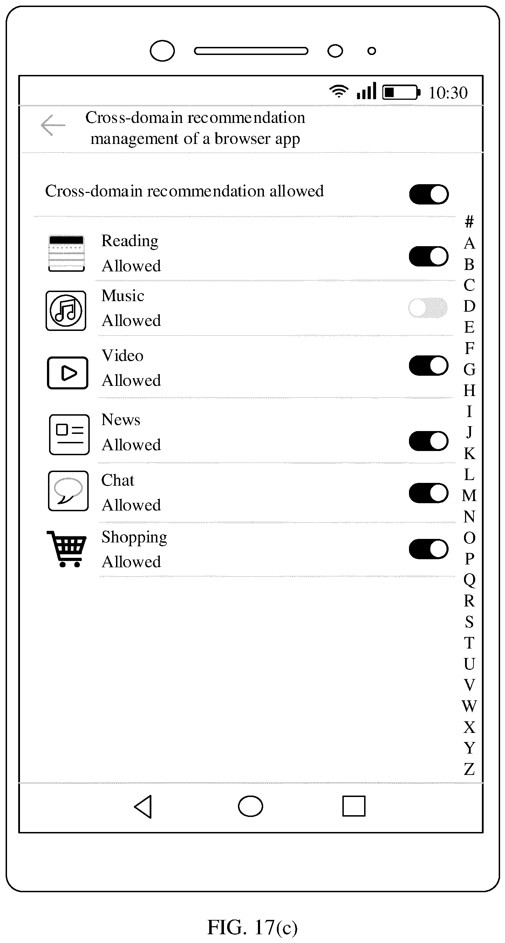

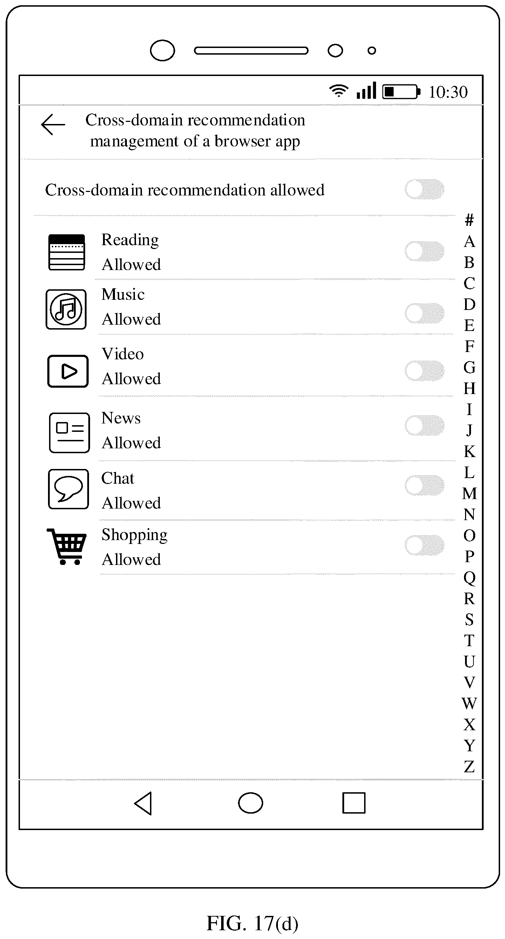

For ease of understanding, a mobile phone is used as an electronic device in this application. Some human computer interaction embodiments of this application are first described. FIG. 17(a), FIG. 17(b), FIG. 17(c), and FIG. 17(d) are a schematic diagram of a group of graphical user interfaces (graphical user interface, GUI) according to an embodiment of this application.

A user may perform a tap operation of application setting in the mobile phone, and in response to the tap operation, the mobile phone enters an application setting main interface 301. The application setting main interface may display content shown in FIG. 17(a). The main interface 301 may include a batch management control, a cross-domain recommendation management control of each application, a sidebar alphabetical order index control, and the like. The main interface 301 may further display whether cross-domain recommendation functions of the applications (for example, a music app, a reading app, a browser app, a news app, a video app, or a shopping app) are "enabled" or "disabled". In some embodiments, the cross-domain recommendation management controls of the applications displayed in the main interface 301 may be displayed in a sequence of application name initial letters from "A" to "Z", where each application corresponds to its own cross-domain recommendation management control. It should be understood that the main interface 301 may further include other more, less, or similar display content. This is not limited in this application.

When the user taps a cross-domain recommendation management control of an application, the mobile phone may display a cross-domain recommendation management interface corresponding to the application. For example, the user performs a tap operation on the cross-domain recommendation management control of the browser app shown in FIG. 17(a), and in response to the tap operation, the mobile phone enters a cross-domain recommendation management interface 302 of the browser app. The cross-domain recommendation management interface 302 may display content shown in FIG. 17(b). The cross-domain recommendation management interface 302 may include a cross-domain recommendation allow control. It should be understood that the cross-domain recommendation management interface 302 may further include other more or less similar display content, and the cross-domain recommendation management interface 302 may also include different display content based on different applications. This is not limited in this embodiment of this application.

Optionally, a default state of the cross-domain recommendation management control may be a disabled state.

For example, as shown in FIG. 17(b), the cross-domain recommendation allow control is in an enabled state, and a cross-domain recommendation function of the browser app is enabled. Correspondingly, the browser app may obtain user interaction data from a plurality of apps and perform learning, to recommend a related video to the user. Further, when the cross-domain recommendation allow control is in the enabled state, the cross-domain recommendation management interface 302 may further present a learning list of the browser app, where the learning list includes a plurality of options. An option in the cross-domain recommendation management interface 302 may be understood as an application name and a corresponding switch control. Therefore, it may also be said that the cross-domain recommendation management interface 302 includes the cross-domain recommendation allow control, and a plurality of options, each of the plurality of options is associated with one application, and an option associated with the application is used to control enabling or disabling of a permission of the browser app to obtain user behavior data from the application. It may also be understood that an option associated with an application is used to control the browser app to perform a cross-domain recommendation function based on user behavior data in the application. For ease of understanding, in the following embodiments, a switch control is still used to illustrate a meaning of an option.

As described above, the learning list includes a plurality of options, in other words, names of a plurality of applications and corresponding switch controls are presented in the cross-domain recommendation management interface 302. As shown in FIG. 17(b), when a switch control corresponding to an application is enabled, the video appAPP may obtain user behavior data from the app, and perform learning, to perform recommendation for the user. The cross-domain recommendation interface 302 may further display an event that applications whose cross-domain recommendation functions are "allowed" or "forbidden" obtain user data in the applications (for example, a music app, a reading app, a browser app, a news app, a video app, or a shopping app). As shown in FIG. 17(b), when the cross-domain recommendation allow control is in an enabled state, a plurality of switch controls are presented in a first interface, and the plurality of switch controls respectively correspond to applications such as a music app, a reading app, a shopping app, a video app, a news app, and a chat app. A control corresponding to the music app is used as an example. When the control corresponding to the music app is in an enabled state, that is, an "allowed" state exists below the music app, the browser app may obtain user behavior data from the music app, and perform learning, to perform recommendation for the user.

If the user performs a disabling operation on the control corresponding to the music app, in response to the disabling operation, the mobile phone presents content shown in FIG. 17(c), and the browser app no longer obtains the user behavior data from the music app, that is, the browser app is not allowed to obtain the user behavior data from the music app. If the user performs a disabling operation on the cross-domain recommendation allow control, in response to the disabling operation, the cross-domain recommendation function of the browser app is disabled, that is, the browser app is not allowed to obtain user interaction data in another app. For example, the user performs a tap operation on the cross-domain recommendation allow control, as shown in FIG. 17(b), and in response to the tap operation, the mobile phone disables the cross-domain recommendation function of the browser app. The cross-domain recommendation management interface may display content shown in FIG. 17(d), and the cross-domain recommendation function of the browser app in all applications in the learning list is disabled. In this way, management efficiency can be improved, and user experience can be improved.

Content recommended by the application to the user is a recommended object, and the recommended object may be displayed in the application. When the user enters the application, a recommendation request may be triggered, and a recommendation model recommends related content to the user based on the recommendation request.

For example, an information flow recommended by the browser app to the user may be displayed in a main interface of the browser app.

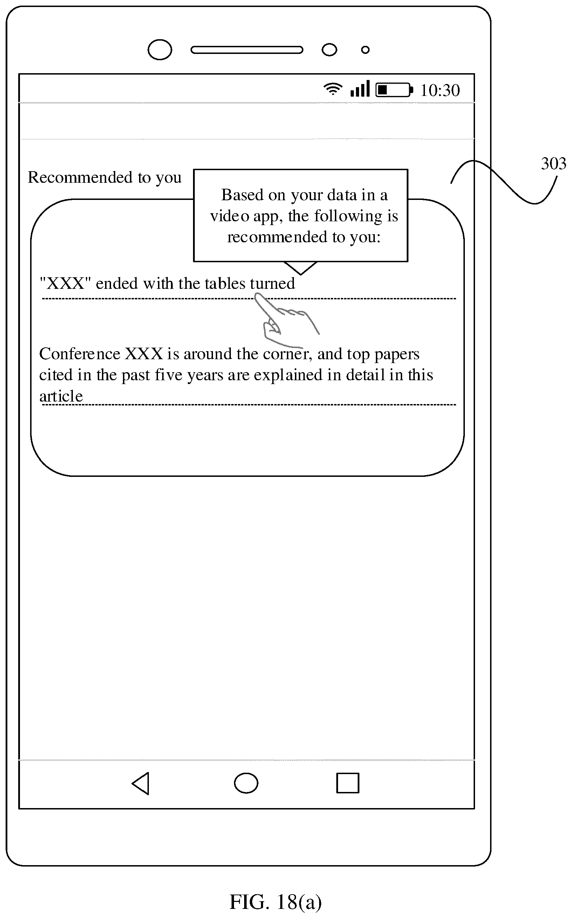

For example, when the user performs a tap operation on the browser app, in response to the tap operation, the mobile phone displays a main interface 303 of the browser app shown in FIG. 18(a), and the main interface 303 of the browser app may display a recommendation list of one or more pieces of recommended content. The one or more pieces of recommended content are a recommended object in the browser app. It should be understood that the main interface 303 of the browser app may further include other more or less display content. This is not limited in this application.

The user may perform a specific operation on content presented in the recommendation list of the main interface 303 of the browser app, to view the recommended content, delete (or ignore) the recommended content, view information about the recommended content, and the like. For example, the user taps specific recommended content, and in response to the tap operation, the mobile phone may open the recommended content. In another example, the user flicks specific recommended content leftward (or rightward), and in response to the operation, the mobile phone may delete the recommended content from the recommendation list. In another example, when the user touches and holds specific recommended content, in response to the touch and hold operation, the mobile phone may display information about the recommended content. As shown in FIG. 18(a), the user performs the touch and hold operation shown in FIG. 18(a), and in response to the touch and hold operation, the mobile phone may display a prompt box shown in the figure. A selection box displays prompt information, and the prompt information is used to prompt the user that the recommended content is recommended based on user interaction data in another application. As shown in FIG. 18(a), the prompt information is used to prompt the user that the recommended content is content recommended to the user based on data of the user in the video app.

It should be understood that, in some other embodiments, the user may open a video or delete the recommended content in another manner, or may invoke information about the recommended content in another manner, for example, through sliding leftward or rightward slowly. This is not limited in this embodiment of this application.

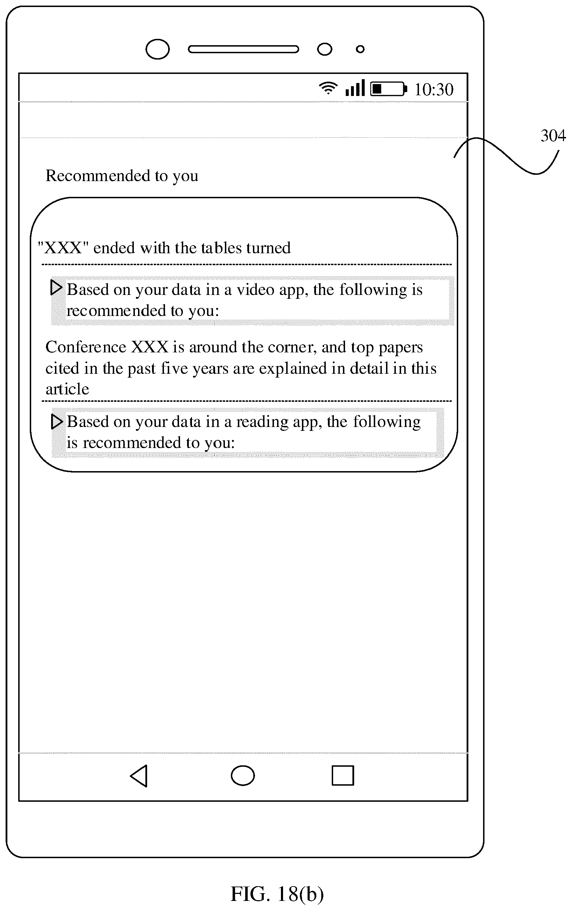

For example, when the user performs a tap operation on the browser app, in response to the tap operation, the mobile phone may further display a main interface 304 of the browser app shown in FIG. 18(b), and the main interface 304 may display a recommendation list of one or more pieces of recommended content, and prompt information corresponding to the one or more pieces of recommended content. The one or more pieces of recommended content are a recommended object in the browser app. It should be understood that the main interface 304 may further include other more or less display content. This is not limited in this application. The prompt information is used to prompt the user that the recommended content is recommended based on user interaction data in another application.

The user may perform a specific operation on a video presented in the recommendation list of the main interface 304, to view the recommended content, delete (or ignore) the recommended content, and the like. For example, the user taps specific recommended content, and in response to the tap operation, the mobile phone may open the recommended content. In another example, the user flicks specific recommended content leftward (or rightward), and in response to the operation, the mobile phone may delete the recommended content from the recommendation list. It should be understood that, in some other embodiments, the user may open or delete the recommended content in another manner, or may delete information about the recommended content in another manner, for example, through sliding leftward or rightward slowly. This is not limited in this embodiment of this application.

It should be understood that the prompt information mainly provides reference information for the user, so that the user knows that a current recommended object is obtained based on the cross-domain recommendation function. Content of the prompt information may alternatively have another form. This is not limited in this embodiment of this application.

It should be noted that, in this embodiment of this application, that the user deletes the recommended content in the main interface may be understood as that the user only deletes specific recommended content from the recommendation list of the main interface, in other words, the user is not interested in the recommended content. The behavior may be recorded in a user behavior log and used as training data for a recommendation model, for example, used as a biased sample in the foregoing method.

When a large quantity of applications exist on the mobile phone, cross-domain recommendation functions may be enabled for some applications that require cross-domain recommendation. For example, the cross-domain recommendation function of the application may be enabled or disabled in the following two manners.

One manner is to disable or enable a cross-domain recommendation function of only one application. For example, as shown in FIG. 13, in the cross-domain recommendation management interface corresponding to the applications, a cross-domain recommendation function of only one application may be enabled or disabled by enabling or disabling a cross-domain recommendation allow control.

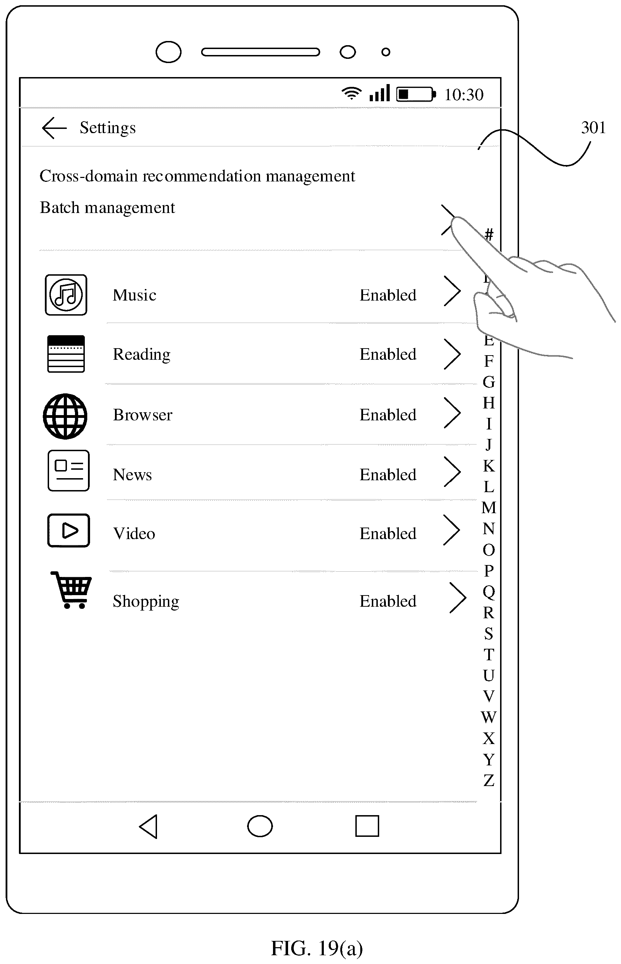

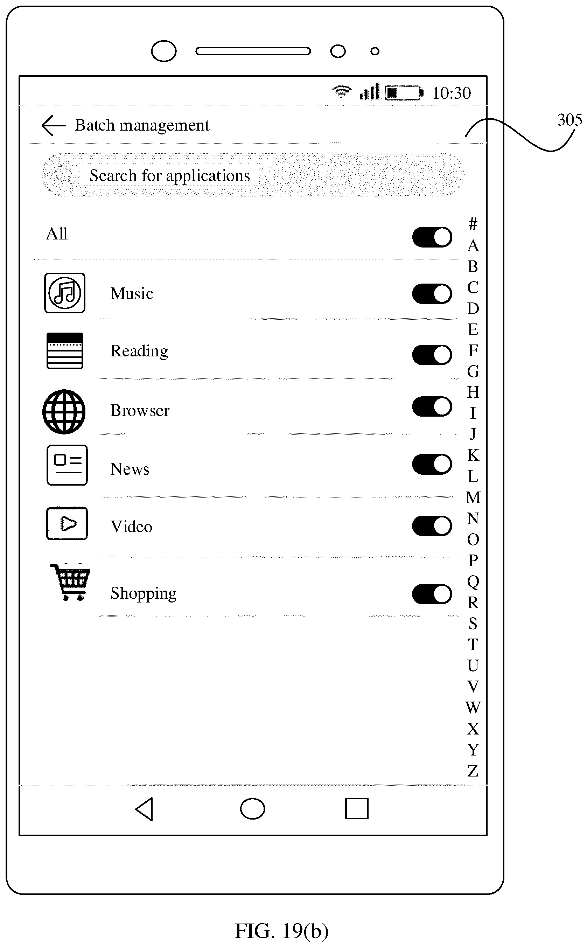

The other manner is to disable or enable the cross-domain recommendation functions of all the applications in batches. For example, FIG. 19(a) shows the same interface as FIG. 17(a). The user performs a tap operation on a batch management control shown in FIG. 19(a), and in response to the tap operation, the user enters a batch management interface 305, which may include a search application control, a cross-domain recommendation main switch control, a cross-domain recommendation switch control of each application, a sidebar alphabetical order index control, or the like. The user may enable the cross-domain learning functions of all the applications or disable the cross-domain recommendation functions of all the applications by controlling enabling or disabling of the cross-domain recommendation main switch control (a switch after "all" in the figure). The batch management interface 305 further includes a cross-domain recommendation switch control of each application. The user may alternatively enable or disable a cross-domain recommendation function of a single application by controlling enabling or disabling of a cross-domain recommendation switch control of the application. In some embodiments, the cross-domain recommendation switch controls of the applications displayed in the batch management interface 305 may be displayed in a sequence of application name initial letters from "A" to "Z", and the cross-domain recommendation function of each application is controlled by the cross-domain recommendation switch control of the application.

It should be understood that, in this embodiment of this application, it may be considered that "disabling cross-domain recommendation", "disabling cross-domain recommendation of an application", "disabling a cross-domain recommendation function", and "disabling a cross-domain recommendation function of an application" express a same meaning. To be specific, it may be understood that the cross-domain recommendation function of the application is disabled, and the application no longer performs cross-domain recommendation. Similarly, it may be considered that "enabling cross-domain recommendation", "enabling cross-domain recommendation of an application", "enabling a cross-domain recommendation function", and "enabling a cross-domain recommendation function of an application" express a same meaning. To be specific, it may be understood that the cross-domain recommendation function of the application is enabled, and the application can perform cross-domain recommendation.

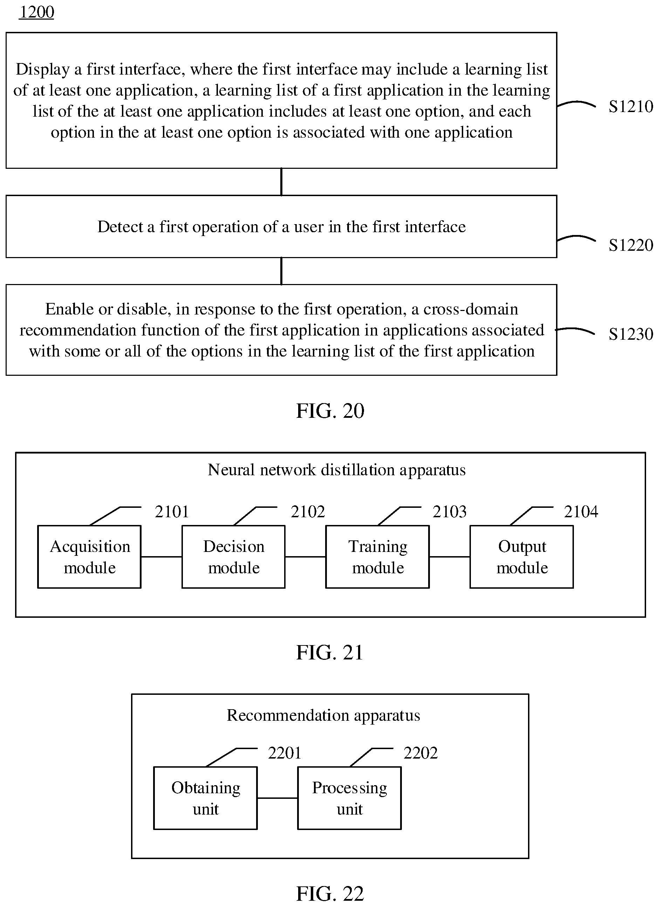

With reference to the foregoing embodiments and related accompanying drawings, an embodiment of this application provides a recommendation method. The method may be implemented in an electronic device (such as a mobile phone or a tablet computer). FIG. 20 is a schematic flowchart of a recommendation method according to an embodiment of this application. As shown in FIG. 20, the method 1200 may include the following steps.

S 1210: Display a first interface.

The first interface may include a learning list of at least one application, a learning list of a first application in the learning list of the at least one application includes at least one option, and each option in the at least one option is associated with one application.

For example, as shown in FIG. 17(b), the first interface may be a cross-domain recommendation management interface 302 of a browser app. The cross-domain recommendation management interface 302 is used to control enabling or disabling of a cross-domain recommendation function of the browser app.

For example, as shown in FIG. 17(b), the learning list of the first application may be a learning list of the browser app.

For example, as shown in FIG. 17(b), the at least one option may have a same name as an application, for example, a "shopping" option, a "map" option, a "health" option, or a "video" option. Each option of the at least one option is associated with one application, and an option associated with the application is used to control enabling or disabling of a function of learning a user behavior in the application. In other words, the option associated with the application is used to control whether to allow a first application to obtain data of the application for cross-domain recommendation.

S 1220: Sense a first operation of a user on the first interface.

The first operation may be a tap operation, a double tap operation, a touch and hold operation, a sliding operation, or the like.

S 1230: Enable or disable, in response to the first operation, a cross-domain recommendation function of the first application in applications associated with some or all of the options in the learning list of the first application.

In other words, the first application is allowed to obtain user behavior data in the applications associated with some or all of the options, and learn preferences of the user in the applications, to perform recommendation for the user in the first application.

After the first operation, the user may learn from the interface that a cross-domain recommendation function of the first application is in an enabled state or a disabled state.

In an embodiment, the first operation acts on a first option, and in response to the first operation of the user on the first option, a cross-domain recommendation function of the first application in an application associated with the first option is enabled or disabled. The first option is located in the learning list of the first application.

For example, as shown in FIG. 17(c), the first option may be the "music" option in the first interface. It should be understood that the first option may be any option associated with an application in the learning list of the first application in the first interface, for example, the "music" option, the "shopping" option, or the "browser" option.

For example, as shown in FIG. 17(c), the first operation may be an enabling or disabling operation on a switch control corresponding to the first option. For example, when the switch control corresponding to the first option is in an enabled state, the first operation may be used to disable the switch control corresponding to the first option, and correspondingly, a function of performing cross-domain recommendation by the first application in the application associated with the first option is disabled. For example, when the switch control corresponding to the first option is in a disabled state, the first operation may be used to enable the switch control corresponding to the first option, and correspondingly, a function of performing cross-domain recommendation by the first application in the application associated with the first option is enabled. In this way, the user can separately control enabling or disabling of the cross-domain recommendation function of the first application in each of the other applications.

In an embodiment, the first operation acts on switch controls corresponding to the learning list of the first application, and in response to the first operation performed by the user on the switch controls, the cross-domain recommendation functions of the first application in the applications associated with all of the options in the learning list of the first application are enabled or disabled.

For example, as shown in FIG. 17(b), the first operation may be a disabling operation on a cross-domain recommendation allow control. Optionally, if the cross-domain recommendation allow control is in a disabled state before the first operation, the first operation may be an enabling operation on the cross-domain recommendation allow control. In this way, the user can integrally control the cross-domain recommendation function of the first application, to improve management efficiency and improve user experience.

In an embodiment, the method 1200 further includes: displaying a second interface, where the second interface is configured to present one or more recommended objects and prompt information of the one or more recommended objects. The prompt information of the one or more recommended objects is used to indicate that the one or more recommended objects are determined based on user behavior data in an application in the at least one application.

For example, as shown in FIG. 18(a), the second interface may be a main interface 303 of the browser app.

For example, as shown in FIG. 18(b), the second interface may be a main interface 304 of the browser app.

For example, as shown in FIG. 18(a) and FIG. 18(b), the prompt information may be used to prompt the user that current recommended content is obtained based on data of the video app.

In an embodiment, one or more recommended objects are determined by inputting information about the user and information about a recommended object candidate into a recommendation model, and predicting a probability that the user performs an operational action on the recommended object candidate.

For example, user behavior data in the video app is used as data of a source domain, and user behavior in the browser app is used as data of a target domain. The recommendation model may be obtained by performing the foregoing method 1100, and a probability that the user performs an operational action on the recommended object candidate may be predicted by using the recommendation model. Recommended content is determined based on the probability value, and the content shown in FIG. 14 is further displayed.

In an embodiment, the recommendation model is obtained by training a first neural network by using a biased data set and an unbiased data set in a sample set in a first distillation manner, the biased data set includes biased samples, the unbiased data set includes unbiased samples, the first distillation manner is determined based on data features of the sample set, the samples in the biased data set include information about a first user, information about a first recommended object, and actual labels, the actual labels of the samples in the unbiased data set are used to represent whether the first user performs an operational action on the first recommended object, the samples in the unbiased data set include information about a second user, information about a second recommended object, and actual labels, and the actual labels of the samples in the unbiased data set are used to represent whether the second user performs an operational action on the second recommended object.

For example, when the user allows the first application to enable the cross-domain recommendation function, the first application may obtain the user behavior data from an application associated with the first option, and use user behavior data in the application associated with the first option as the data of the source domain. It should be understood that the data of the source domain may further include user behavior data in another application. For example, when the user allows the first application to perform cross-domain learning in applications associated with all of the options in the learning list of the first application, the first application may obtain user behavior data from the applications associated with all of the options, and use all the obtained user behavior data as the data of the source domain.

For example, the recommendation model may use the updated first neural network obtained through training in FIG. 6. For specific description, refer to the steps of the method shown in FIG. 6. Details are not described herein again.

In an embodiment, before the first interface is displayed, the method further includes: displaying a third interface, where the third interface includes a switch control corresponding to at least one application; detecting, in the third interface, a third operation performed by the user on the switch control that is of the first application and that is in the switch control corresponding to the at least one application; and displaying the first interface in response to the third operation.

For example, as shown in FIG. 17(a), the third interface may be an application setting main interface 301.

For example, as shown in FIG. 17(a), the switch control of the first application may be a cross-domain recommendation management control of the browser app.

For example, as shown in FIG. 17(a), the third operation may be a tap operation on the switch control corresponding to the first application, and an interface shown in FIG. 17(b) is displayed in response to the tap operation.

Based on the solution in this embodiment of this application, migration and sharing of knowledge (for example, an interest preference of a user) are performed between different domains, and historical user interaction records in a source domain and a target domain are both incorporated into learning, so that a recommendation model can better learn the preference of the user, and can also well fit the interest preference of the user in the target domain, and recommend, to the user, a recommendation result that matches the interest of the user, to implement cross-domain recommendation, and alleviate a cold start problem.

The foregoing describes in detail the processes of the neural network distillation method and the recommendation method provided in this application. The following describes, with reference to the processes of the foregoing methods, apparatuses provided in this application.

FIG. 21 is a schematic diagram of a structure of a neural network distillation apparatus according to this application.

The neural network distillation apparatus may include:

an acquisition module 2101, configured to obtain a sample set, where the sample set includes a biased data set and an unbiased data set, the biased data set includes biased samples, and the unbiased data set includes unbiased samples, and usually, a sample quantity of the biased data set is greater than a sample quantity of the unbiased data set;

a decision module 2102, configured to determine a first distillation manner based on data features of the sample set, where guiding manners of a teacher model for a student model during knowledge distillation in different distillation manners are different, the teacher model is obtained through training by using the unbiased data set, and the student model is obtained through training by using the biased data set; and

a training module 2103, configured to train a first neural network based on the biased data set and the unbiased data set in the first distillation manner, to obtain an updated first neural network.

In a possible implementation, samples in the sample set include input features and actual labels, and the first distillation manner is performing distillation based on the input features of the samples in the biased data set and the unbiased data set.

In a possible implementation, the training module 2103 is specifically configured to train the first neural network by using the biased data set and the unbiased data set alternately, to obtain the updated first neural network, where in an alternate process, a quantity of batch training times of training the first neural network by using the biased data set and a quantity of batch training times of training the first neural network by using the unbiased data set are in a preset ratio, and the samples include the input features as inputs of the first neural network.

In a possible implementation, when the preset ratio is 1, a difference between a first regularization term and a second regularization term is added to a loss function of the first neural network, the first regularization term is a parameter obtained by training the first neural network by using the samples included in the unbiased data set, and the second regularization term is a parameter obtained by training the first neural network by using the samples included in the biased data set.

In a possible implementation, the training module 2103 is specifically configured to: set a confidence for the samples in the biased data set, where the confidence is used to represent a bias degree of the samples; and train the first neural network based on the biased data set, the confidence of the samples in the biased data set, and the unbiased data set, to obtain the updated first neural network, where the samples include the input features as inputs of the first neural network when the first neural network is trained.

In a possible implementation, the samples included in the biased data set and the unbiased data set include input features and actual labels, the first distillation manner is performing distillation based on prediction labels of the samples included in the unbiased data set, the prediction labels are output by an updated second neural network for the samples in the unbiased data set, and the updated second neural network is obtained by training a second neural network by using the unbiased data set.

In a possible implementation, the sample set further includes an unobserved data set, and the unobserved data set includes a plurality of unobserved samples; and the training module 2103 is specifically configured to: train the first neural network by using the biased data set, to obtain a trained first neural network, and train the second neural network by using the unbiased data set, to obtain the updated second neural network; acquire a plurality of samples from the sample set, to obtain an auxiliary data set; and update the trained first neural network by using the auxiliary data set and by using prediction labels of the samples in the data set as constraints, to obtain the updated first neural network, where the prediction labels of the samples in the data set are output by the updated second neural network.

In a possible implementation, the training module 2103 is specifically configured to: train the second neural network by using the unbiased data set, to obtain the updated second neural network; output prediction labels of the samples in the biased data set by using the updated second neural network; perform weighted merging on the prediction labels of the samples and actual labels of the samples, to obtain merged labels of the samples; and train the first neural network by using the merged labels of the samples, to obtain the updated first neural network.

In a possible implementation, the decision module 2102 is specifically configured to: calculate a first ratio of a sample quantity of the unbiased data set to a sample quantity of the biased data set, and select the first distillation manner matching the first ratio from a plurality of distillation manners, where the data features of the sample set include the first ratio.

In a possible implementation, the first distillation manner includes: training the teacher model based on features extracted from the unbiased data set, and performing knowledge distillation on the student model by using the teacher model and the biased data set.

In a possible implementation, the training module 2103 is specifically configured to: output features of the unbiased data set by using a preset algorithm; train the second neural network based on the features of the unbiased data set, to obtain the updated second neural network; use the second neural network as the teacher model, use the first neural network as the student model, and perform knowledge distillation on the first neural network by using the biased data set, to obtain the updated first neural network.

In a possible implementation, the training module 2103 is specifically configured to: obtain a quantity of feature dimensions included in the unbiased data set and the biased data set; and select the first distillation manner matching the quantity of the feature dimensions from a plurality of distillation manners, where the data features of the sample set include the quantity of feature dimensions.

In a possible implementation, the training module 2103 is specifically configured to: update the second neural network by using the unbiased data set, to obtain the updated second neural network; use the updated second neural network as the teacher model, use the first neural network as the student model, and perform knowledge distillation on the first neural network by using the biased data set, to obtain the updated first neural network.

In a possible implementation, based on at least one of data included in the biased data set or data included in the unbiased data set, the decision module 2102 is specifically configured to: calculate a second ratio of a quantity of positive samples included in the unbiased data set to a quantity of negative samples included in the unbiased data set, and select the first distillation manner matching the second ratio from a plurality of distillation manners, where the data features of the sample set include the second ratio; or calculate a third ratio of a quantity of positive samples included in the biased data set to a quantity of negative samples included in the biased data set, and select the first distillation manner matching the third ratio from a plurality of distillation manners, where the data features of the sample set include the third ratio.

In a possible implementation, a type of the samples included in the biased data set is different from a type of the samples included in the unbiased data set.

In a possible implementation, after the updated first neural network is obtained, the apparatus further includes: an output module 2104, configured to: obtain at least one sample of a target user; use the at least one sample as an input of the updated first neural network, and output at least one label of the target user, where the at least one label constitutes a user portrait of the target user, and the user portrait is used to determine a sample matching the target user.

FIG. 22 is a schematic diagram of a structure of a recommendation apparatus according to this application. The recommendation apparatus includes:

an obtaining unit 2201, configured to obtain information about a target user and information about a recommended object candidate; and

a processing unit 2202, configured to: input the information about the target user and the information about the recommended object candidate into a recommendation model, and predict a probability that the target user performs an operational action on the recommended object candidate, where
the recommendation model is obtained by training a first neural network by using a biased data set and an unbiased data set in a sample set in a first distillation manner, the biased data set includes biased samples, the unbiased data set includes unbiased samples, the first distillation manner is determined based on data features of the sample set, the samples in the biased data set include information about a first user, information about a first recommended object, and actual labels, the actual labels of the samples in the unbiased data set are used to represent whether the first user performs an operational action on the first recommended object, the samples in the unbiased data set include information about a second user, information about a second recommended object, and actual labels, and the actual labels of the samples in the unbiased data set are used to represent whether the second user performs an operational action on the second recommended object.

In a possible implementation, the unbiased data set is obtained when the recommended object candidate in a recommended object candidate set is displayed at a same probability, and the second recommended object is a recommended object candidate in the recommended object candidate set.

In a possible implementation, that the unbiased data set is obtained when the recommended object candidate in a recommended object candidate set is displayed at a same probability may include: The samples in the unbiased data set are obtained when the recommended object candidate in the recommended object candidate set is randomly displayed to the second user; or the samples in the unbiased data set are obtained when the second user searches for the second recommended object.

In a possible implementation, the samples in the unbiased data set are data in a source domain, and the samples in the biased data set are data in a target domain.

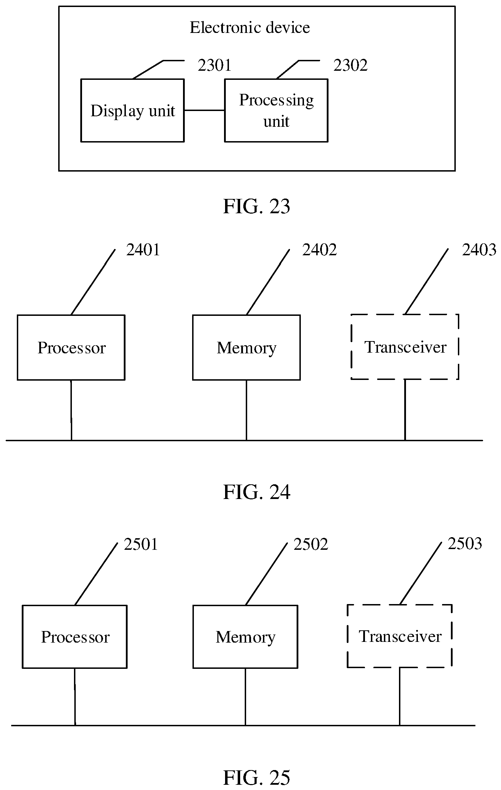

FIG. 23 is a schematic diagram of a structure of an electronic device according to this application. Details are as follows:

a display unit 2301, configured to display a first interface, where the first interface includes a learning list of at least one application, a learning list of a first application in the learning list of the at least one application includes at least one option, and an option in the at least one option is associated with one application; and

a processing unit 2302, configured to sense a first operation of a user in the first interface, where
the display unit is further configured to enable or disable, in response to the first operation, a cross-domain recommendation function of the first application in applications associated with some or all of the options in the learning list of the first application.

In a possible implementation, one or more recommended objects are determined by inputting information about the user and information about a recommended object candidate into a recommendation model, and predicting a probability that the user performs an operational action on the recommended object candidate.

In a possible implementation, the recommendation model is obtained by training a first neural network by using a biased data set and an unbiased data set in a sample set in a first distillation manner, the biased data set includes biased samples, the unbiased data set includes unbiased samples, the first distillation manner is determined based on data features of the sample set, the samples in the biased data set include information about a first user, information about a first recommended object, and actual labels, the actual labels of the samples in the unbiased data set are used to represent whether the first user performs an operational action on the first recommended object, the samples in the unbiased data set include information about a second user, information about a second recommended object, and actual labels, and the actual labels of the samples in the unbiased data set are used to represent whether the second user performs an operational action on the second recommended object.

FIG. 24 is a schematic diagram of a structure of another neural network distillation apparatus according to this application. Details are as follows:

The neural network distillation apparatus may include a processor 2401 and a memory 2402. The processor 2401 and the memory 2402 are interconnected through a line. The memory 2402 stores program instructions and data.

The memory 2402 stores the program instructions and the data that correspond to the steps in FIG. 6.

The processor 2401 is configured to perform method steps to be performed by the neural network distillation apparatus shown in any embodiment in FIG. 6.

Optionally, the neural network distillation apparatus may further include a transceiver 2403, configured to receive or send data.

An embodiment of this application further provides a computer-readable storage medium. The computer-readable storage medium stores programs. When the programs are run on a computer, the computer is enabled to perform the steps in the method described in the embodiment shown in FIG. 6.

Optionally, the neural network distillation apparatus shown in FIG. 24 is a chip.

FIG. 25 is a schematic diagram of a structure of another recommendation apparatus according to this application. Details are as follows:

The recommendation apparatus may include a processor 2501 and a memory 2502. The processor 2501 and the memory 2502 are interconnected through a line. The memory 2502 stores program instructions and data.

The memory 2502 stores the program instructions and the data that correspond to the steps in FIG. 11.

The processor 2501 is configured to perform method steps to be performed by the recommendation apparatus shown in any embodiment in FIG. 11.

Optionally, the recommendation apparatus may further include a transceiver 2503, configured to receive or send data.

An embodiment of this application further provides a computer-readable storage medium. The computer-readable storage medium stores programs. When the programs are run on a computer, the computer is enabled to perform the steps in the method described in the embodiment shown in FIG. 11.

Optionally, the recommendation apparatus shown in FIG. 25 is a chip.

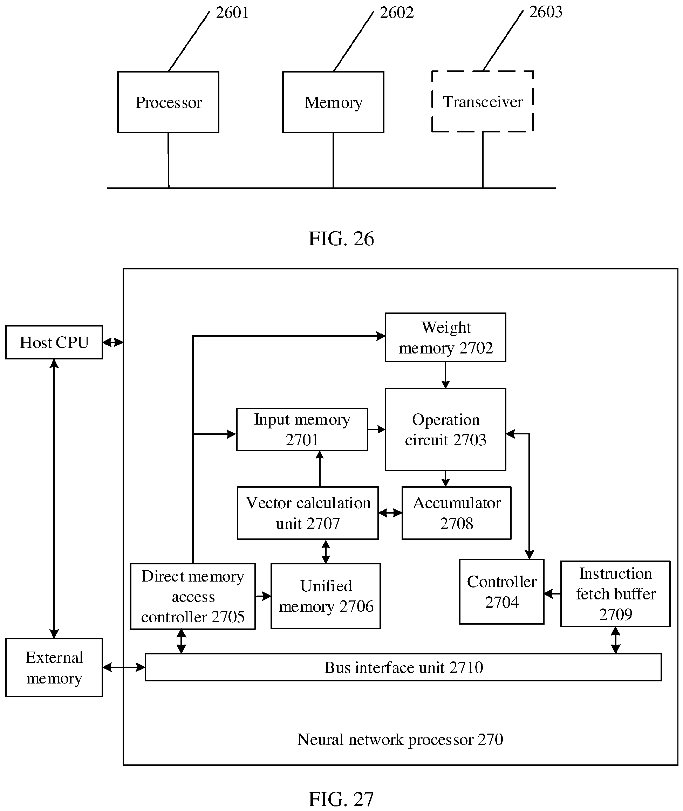

FIG. 26 is a schematic structural diagram of a structure of another electronic device according to this application. Details are as follows:

The electronic device may include a processor 2601 and a memory 2602. The processor 2601 and the memory 2602 are interconnected through a line. The memory 2602 stores program instructions and data.

The memory 2602 stores the program instructions and the data that correspond to the steps in FIG. 20.

The processor 2601 is configured to perform method steps to be performed by the electronic device shown in FIG. 20.

Optionally, the electronic device may further include a transceiver 2603, configured to: receive or send data.

An embodiment of this application further provides a computer-readable storage medium. The computer-readable storage medium stores programs. When the programs are run on a computer, the computer is enabled to perform the steps in the method described in the embodiment shown in FIG. 20.

Optionally, the electronic device shown in FIG. 26 is a chip.

An embodiment of this application further provides a neural network distillation apparatus. The neural network distillation apparatus may also be referred to as a digital processing chip or a chip. The chip includes a processing unit and a communications interface. The processing unit obtains program instructions by using the communications interface.

The program instructions are executed by the processing unit. The processing unit is configured to perform the method steps in FIG. 6 to FIG. 20.

An embodiment of this application further provides a digital processing chip. The digital processing chip integrates a circuit configured to implement functions of the processor 2401, the processor 2501, and the processor 2601, or functions of the processor 2301, the processor 2501, and the processor 2601, and one or more interfaces. When a memory is integrated into the digital processing chip, the digital processing chip may complete the method steps in any one or more of the foregoing embodiments. When a memory is not integrated into the digital processing chip, the digital processing chip may be connected to an external memory through a communications interface. The digital processing chip implements actions to be performed by the neural network distillation apparatus, the recommendation apparatus, or the electronic device in the foregoing embodiments based on program code stored in the external memory.

An embodiment of this application further provides a program product including a computer program. When the program product runs on a computer, a computer is enabled to perform the steps in the methods described in embodiments shown in FIG. 6 to FIG. 20.

A neural network distillation apparatus provided in an embodiment of this application may be a chip. The chip includes a processing unit and a communications unit. The processing unit may be, for example, a processor, and the communications unit may be, for example, an input/output interface, a pin, or a circuit. The processing unit may execute computer execution instructions stored in a storage unit, so that the chip in a server performs the training set processing methods described in embodiments shown in FIG. 6 to FIG. 10. Optionally, the storage unit is a storage unit in the chip, for example, a register or a cache, or the storage unit may be a storage unit that is in the radio access device end and that is located outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or may be any conventional processor, or the like.

For example, FIG. 27 is a schematic diagram of a structure of a chip according to an embodiment of this application. The chip may be represented as a neural-network processing unit NPU 270. The NPU 270 is mounted to a host CPU (host CPU) as a coprocessor, and the host CPU allocates a task. A core part of the NPU is an operation circuit 2703. The operation circuit 2703 is controlled by a controller 2704 to extract matrix data in a memory and perform a multiplication operation.

In some implementations, the operation circuit 2703 includes a plurality of process engines (process engines, PEs). In some implementations, the operation circuit 2703 is a two-dimensional systolic array. The operation circuit 2703 may alternatively be a one-dimensional systolic array or another electronic circuit that can perform mathematical operations such as multiplication and addition. In some implementations, the operation circuit 2703 is a general-purpose matrix processor.

For example, it is assumed that there are an input matrix A, a weight matrix B, and an output matrix C. The operation circuit fetches data corresponding to the matrix B from a weight memory 2702 and buffers the data on each PE in the operation circuit. The operation circuit fetches data of the matrix A from an input memory 2701, to perform a matrix operation with the matrix B to obtain a partial result or a final result of a matrix, and stores the result into an accumulator (accumulator) 2708.

A unified memory 2706 is configured to store input data and output data. The weight data is directly transferred to the weight memory 2702 by using a direct memory access controller (direct memory access controller, DMAC) 2705. The input data is also transferred to the unified memory 2706 by using the DMAC.

A bus interface unit (bus interface unit, BIU) 2710 is configured to interact with the DMAC and an instruction fetch buffer (instruction fetch buffer, IFB) 2709 through an AXI bus.

The bus interface unit (bus interface unit, BIU) 2710 is used by the instruction fetch buffer 2709 to obtain instructions from an external memory, and is further used by the direct memory access controller 2705 to obtain original data corresponding to the input matrix A or the weight matrix B from the external memory.

The DMAC is mainly configured to transfer input data in the external memory DDR to the unified memory 2706, transfer weight data to the weight memory 2702, or transfer input data to the input memory 2701.

A vector calculation unit 2707 includes a plurality of operation processing units; and if necessary, performs further processing such as vector multiplication, vector addition, an exponential operation, a logarithmic operation, or value comparison on an output of the operation circuit. The vector calculation unit 2707 is mainly configured to perform network calculation at a non-convolutional/fully connected layer in a neural network, for example, batch normalization (batch normalization), pixel-level summation, and upsampling on a feature plane.

In some implementations, the vector calculation unit 2707 can store a processed output vector in the unified memory 2706. For example, the vector calculation unit 2707 may apply a linear function and/or a non-linear function to the output of the operation circuit 2703, for example, perform linear interpolation on a feature plane extracted at a convolutional layer, and for another example, accumulate vectors of values to generate an activation value. In some implementations, the vector calculation unit 2707 generates a normalized value, a value obtained after pixel-level summation, or a combination thereof. In some implementations, the processed output vector can be used as activation input for the operation circuit 2703, for example, the processed output vector is used in a subsequent layer in the neural network.

The instruction fetch buffer (instruction fetch buffer) 2709 connected to the controller 2704 is configured to store instructions used by the controller 2704.

The unified memory 2706, the input memory 2701, the weight memory 2702, and the instruction fetch buffer 2709 all are on-chip memories. The external memory is private to a hardware architecture of the NPU.

An operation at each layer in the recurrent neural network may be performed by the operation circuit 2703 or the vector calculation unit 2707.

The processor mentioned above may be a general-purpose central processing unit, a microprocessor, an ASIC, or one or more integrated circuits for controlling program execution of the methods in FIG. 6 to FIG. 20.

In addition, it should be noted that described apparatus embodiments are merely examples. The units described as separate parts may or may not be physically separate, and parts displayed as units may or may not be physical units, and may be located in one position, or may be distributed on a plurality of network units. Some or all the modules may be selected based on actual needs to achieve the objectives of the solutions of embodiments. In addition, in the accompanying drawings of apparatus embodiments provided in this application, connection relationships between modules indicate that the modules have communication connections to each other, which may be specifically implemented as one or more communications buses or signal cables.

Based on the descriptions of the foregoing implementations, a person skilled in the art may clearly understand that this application may be implemented by software in addition to necessary universal hardware, or certainly may be implemented by dedicated hardware, including a dedicated integrated circuit, a dedicated CPU, a dedicated memory, a dedicated component, and the like. Usually, all functions completed by a computer program may be easily implemented by using corresponding hardware, and a specific hardware structure used to implement a same function may also be of various forms, for example, a form of an analog circuit, a digital circuit, or a dedicated circuit. However, in this application, a software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedure or functions according to embodiments of this application are completely or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (solid-state drive, SSD)), or the like.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in an appropriate circumstance, so that embodiments described herein can be implemented in another order than the order illustrated or described herein. Moreover, terms "include", "comprise", and any other variants mean to cover non-exclusive inclusion, for example, a process, method, system, product, or device that includes a list of steps or units is not necessarily limited to those steps or units, but may include other steps or units not expressly listed or inherent to such a process, method, product, or device.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network distillation method, comprising:

   obtaining a sample set, wherein the sample set comprises a biased data set and an unbiased data set, the biased data set comprises biased samples, and the unbiased data set comprises unbiased samples;
   determining a first distillation manner based on data features of the sample set, wherein in the first distillation manner, a teacher model is trained by using the unbiased data set, and a student model is trained by using the biased data set; and
   training a first neural network based on the biased data set and the unbiased data set in the first distillation manner, to obtain an updated first neural network.

2. The method according to claim 1, wherein samples in the sample set comprise input features and actual labels, and the first distillation manner is performing distillation by using the input features of the samples in the sample set.

3. The method according to claim 2, wherein the training a first neural network based on the biased data set and the unbiased data set in the first distillation manner, to obtain an updated first neural network comprises:
   training the first neural network by using the biased data set and the unbiased data set alternately, to obtain the updated first neural network, wherein in an alternate process, a quantity of batch training times of training the first neural network by using the biased data set and a quantity of batch training times of training the first neural network by using the unbiased data set are in a preset ratio, and the input features of the samples in the sample set are used as inputs of the first neural network.

4. The method according to claim 2, wherein the training a first neural network based on the biased data set and the unbiased data set in the first distillation manner, to obtain an updated first neural network comprises:

   setting a confidence for the samples in the biased data set, wherein the confidence is used to represent a bias degree of the samples; and
   training the first neural network based on the biased data set, the confidence of the samples in the biased data set, and the unbiased data set, to obtain the updated first neural network, wherein the samples comprise the input features as inputs of the first neural network when the first neural network is trained.

5. The method according to claim 1, wherein the first distillation manner is performing distillation based on prediction labels of the samples comprised in the unbiased data set, the prediction labels are output by an updated second neural network for the samples in the unbiased data set, and the updated second neural network is obtained by training a second neural network by using the unbiased data set.

6. The method according to claim 5, wherein the sample set further comprises an unobserved data set, and the unobserved data set comprises a plurality of unobserved samples; and
   the training a first neural network based on the biased data set and the unbiased data set in the first distillation manner, to obtain an updated first neural network comprises:

   training the first neural network by using the biased data set, to obtain a trained first neural network, and training the second neural network by using the unbiased data set, to obtain the updated second neural network;
   acquiring a plurality of samples from the sample set, to obtain an auxiliary data set; and
   updating the trained first neural network by using the auxiliary data set and by using prediction labels of the samples in the auxiliary data set as constraints, to obtain the updated first neural network, wherein the prediction labels of the samples in the data set comprise labels output by the updated second neural network.

7. The method according to claim 5, wherein the training a first neural network based on the biased data set and the unbiased data set in the first distillation manner, to obtain an updated first neural network comprises:

training the second neural network by using the unbiased data set, to obtain the updated second neural network;

outputting prediction labels of the samples in the biased data set by using the updated second neural network;

performing weighted merging on the prediction labels of the samples and actual labels of the samples, to obtain merged labels of the samples; and

training the first neural network by using the merged labels of the samples, to obtain the updated first neural network.

8. The method according to any one of claims 2 to 7, wherein the data features of the sample set comprise the first ratio, the first ratio is a ratio of a sample quantity of the unbiased data set to a sample quantity of the biased data set, and the determining a first distillation manner based on data features of the sample set comprises:
   selecting the first distillation manner matching the first ratio from a plurality of distillation manners.

9. The method according to claim 1, wherein the first distillation manner comprises: training the teacher model based on features extracted from the unbiased data set, to obtain a trained teacher model, and performing knowledge distillation on the student model by using the trained teacher model and the biased data set.

10. The method according to claim 9, wherein the training a first neural network based on the biased data set and the unbiased data set in the first distillation manner, to obtain an updated first neural network comprises:

    filtering input features of some samples from the unbiased data set by using a deep global balancing regression DGBR algorithm;

    training the second neural network based on the input features of some samples, to obtain the updated second neural network; and

    using the updated second neural network as the teacher model, using the first neural network as the student model, and performing knowledge distillation on the first neural network by using the biased data set, to obtain the updated first neural network.

11. The method according to claim 9 or 10, wherein the data features of the sample set comprise a quantity of feature dimensions of the sample set, and the determining a first distillation manner based on data features of the sample set comprises:
    selecting the first distillation manner matching the quantity of the feature dimensions from a plurality of distillation manners.

12. The method according to any one of claims 1 to 11, wherein the first distillation manner is selected from a plurality of preset distillation manners, and the plurality of distillation manners comprise at least two distillation manners with different guiding manners of the teacher model for the student model.

13. A recommendation method, comprising:

    obtaining information about a target user and information about a recommended object candidate;

    inputting the information about the target user and the information about the recommended object candidate into a recommendation model, and predicting a probability that the target user performs an operational action on the recommended object candidate, wherein

    the recommendation model is obtained by training a first neural network by using a biased data set and an unbiased data set in a sample set in a first distillation manner, the biased data set comprises biased samples, the unbiased data set comprises unbiased samples, the first distillation manner is determined based on data features of the sample set, the samples in the biased data set comprise information about a first user, information about a first recommended object, and actual labels, the actual labels of the samples in the unbiased data set are used to represent whether the first user performs an operational action on the first recommended object, the samples in the unbiased data set comprise information about a second user, information about a second recommended object, and actual labels, and the actual labels of the samples in the unbiased data set are used to represent whether the second user performs an operational action on the second recommended object.

14. The method according to claim 13, wherein the unbiased data set is obtained when the recommended object candidate in a recommended object candidate set is displayed at a same probability, and the second recommended object is a recommended object candidate in the recommended object candidate set.

15. The method according to claim 14, wherein that the unbiased data set is obtained when the recommended object candidate in a recommended object candidate set is displayed at a same probability comprises:

> the samples in the unbiased data set are obtained when the recommended object candidate in the recommended object candidate set is randomly displayed to the second user; or
> the samples in the unbiased data set are obtained when the second user searches for the second recommended object.

16. A recommendation method, comprising: displaying a first interface, wherein the first interface comprises a learning list of at least one application, a learning list of a first application in the learning list of the at least one application comprises at least one option, and an option in the at least one option is associated with one application;

> sensing a first operation of a user in the first interface; and
> enabling or disabling, in response to the first operation, a cross-domain recommendation function of the first application in applications associated with some or all of the options in the learning list of the first application.

17. The method according to claim 16, wherein one or more recommended objects are determined by inputting information about the user and information about a recommended object candidate into a recommendation model, and predicting a probability that the user performs an operational action on the recommended object candidate.

18. The method according to claim 17, wherein the recommendation model is obtained by training a first neural network by using a biased data set and an unbiased data set in a sample set in a first distillation manner, the biased data set comprises biased samples, the unbiased data set comprises unbiased samples, the first distillation manner is determined based on data features of the sample set, the samples in the biased data set comprise information about a first user, information about a first recommended object, and actual labels, the actual labels of the samples in the unbiased data set are used to represent whether the first user performs an operational action on the first recommended object, the samples in the unbiased data set comprise information about a second user, information about a second recommended object, and actual labels, and the actual labels of the samples in the unbiased data set are used to represent whether the second user performs an operational action on the second recommended object.

19. A neural network distillation apparatus, comprising:

> an acquisition module, configured to obtain a sample set, wherein the sample set comprises a biased data set and an unbiased data set, the biased data set comprises biased samples, and the unbiased data set comprises unbiased samples;
> a decision module, configured to determine a first distillation manner based on data features of the sample set, wherein in the first distillation manner, a teacher model is obtained through training by using the unbiased data set, and a student model is obtained through training by using the biased data set; and
> a training module, configured to train a first neural network based on the biased data set and the unbiased data set in the first distillation manner, to obtain an updated first neural network.

20. The apparatus according to claim 19, wherein samples in the sample set comprise input features and actual labels, and the first distillation manner is performing distillation by using the input features of the samples in the sample set.

21. The apparatus according to claim 20, wherein
the training module is specifically configured to train the first neural network by using the biased data set and the unbiased data set alternately, to obtain the updated first neural network, wherein in an alternate process, a quantity of batch training times of training the first neural network by using the biased data set and a quantity of batch training times of training the first neural network by using the unbiased data set are in a preset ratio, and the input features of the samples in the sample set are used as inputs of the first neural network.

22. The apparatus according to claim 20, wherein
the training module is specifically configured to: set a confidence for the samples in the biased data set, wherein the confidence is used to represent a bias degree of the samples; and train the first neural network based on the biased data set, the confidence of the samples in the biased data set, and the unbiased data set, to obtain the updated first neural network, wherein the samples comprise the input features as inputs of the first neural network when the first neural network is trained.

23. The apparatus according to claim 19, wherein the first distillation manner is performing distillation based on prediction labels of the samples comprised in the unbiased data set, the prediction labels are output by an updated second neural network for the samples in the unbiased data set, and the updated second neural network is obtained by training a second neural network by using the unbiased data set.

24. The apparatus according to claim 23, wherein the sample set further comprises an unobserved data set, and the unobserved data set comprises a plurality of unobserved samples; and
the training module is specifically configured to:

train the first neural network by using the biased data set, to obtain a trained first neural network, and train the second neural network by using the unbiased data set, to obtain the updated second neural network;
acquire a plurality of samples from the sample set, to obtain an auxiliary data set; and
update the trained first neural network by using the auxiliary data set and by using prediction labels of the samples in the auxiliary data set as constraints, to obtain the updated first neural network, wherein the prediction labels of the samples in the auxiliary data set comprise labels output by the updated second neural network.

25. The apparatus according to claim 23, wherein the training module is specifically configured to:

train the second neural network by using the unbiased data set, to obtain the updated second neural network;
output prediction labels of the samples in the biased data set by using the updated second neural network;
perform weighted merging on the prediction labels of the samples and actual labels of the samples, to obtain merged labels of the samples; and
train the first neural network by using the merged labels of the samples, to obtain the updated first neural network.

26. The apparatus according to any one of claims 20 to 25, wherein the data features of the sample set comprise the first ratio, and the first ratio is a ratio of a sample quantity of the unbiased data set to a sample quantity of the biased data set; and
the decision module is specifically configured to select the first distillation manner matching the first ratio from a plurality of distillation manners.

27. The apparatus according to claim 19, wherein the first distillation manner comprises: training the teacher model based on features extracted from the unbiased data set, to obtain a trained teacher model, and performing knowledge distillation on the student model by using the trained teacher model and the biased data set.

28. The apparatus according to claim 27, wherein the training module is specifically configured to:

filter input features of some samples from the unbiased data set by using a deep global balancing regression DGBR algorithm;
train the second neural network based on the input features of some samples, to obtain the updated second neural network; and
use the second neural network as the teacher model, use the first neural network as the student model, and perform knowledge distillation on the first neural network by using the biased data set, to obtain the updated first neural network.

29. The apparatus according to claim 27 or 28, wherein the data features of the sample set comprise a quantity of feature dimensions of the sample set, and the training module is specifically configured to:
select the first distillation manner matching the quantity of the feature dimensions from a plurality of distillation manners.

30. The apparatus according to any one of claims 19 to 29, wherein
the first distillation manner is selected from a plurality of preset distillation manners, and the plurality of distillation manners comprise at least two distillation manners with different guiding manners of the teacher model for the student model.

31. A recommendation apparatus, comprising:

an obtaining unit, configured to obtain information about a target user and information about a recommended object candidate; and
a processing unit, configured to: input the information about the target user and the information about the recommended object candidate into a recommendation model, and predict a probability that the target user performs an operational action on the recommended object candidate, wherein
the recommendation model is obtained by training a first neural network by using a biased data set and an unbiased data set in a sample set in a first distillation manner, the biased data set comprises biased samples, the unbiased data set comprises unbiased samples, the first distillation manner is determined based on data features of the sample set, the samples in the biased data set comprise information about a first user, information about a first recommended object, and actual labels, the actual labels of the samples in the unbiased data set are used to represent whether the first user performs an operational action on the first recommended object, the samples in the unbiased data set comprise information about a second user, information about a second recommended object, and actual labels, and the actual labels of the samples in the unbiased data set are used to represent whether the second user performs an operational action on the second recommended object.

32. The apparatus according to claim 31, wherein the unbiased data set is obtained when the recommended object candidate in a recommended object candidate set is displayed at a same probability, and the second recommended object is a recommended object candidate in the recommended object candidate set.

33. The apparatus according to claim 32, wherein that the unbiased data set is obtained when the recommended object candidate in a recommended object candidate set is displayed at a same probability comprises:

the samples in the unbiased data set are obtained when the recommended object candidate in the recommended object candidate set is randomly displayed to the second user; or
the samples in the unbiased data set are obtained when the second user searches for the second recommended object.

34. An electronic device, comprising:

a display unit, configured to display a first interface, wherein the first interface comprises a learning list of at least one application, a learning list of a first application in the learning list of the at least one application comprises at least one option, and an option in the at least one option is associated with one application; and
a processing unit, configured to sense a first operation of a user in the first interface, wherein
the display unit is further configured to enable or disable, in response to the first operation, a cross-domain recommendation function of the first application in applications associated with some or all of the options in the learning list of the first application.

35. The electronic device according to claim 34, wherein one or more recommended objects are determined by inputting information about the user and information about a recommended object candidate into a recommendation model, and predicting a probability that the user performs an operational action on the recommended object candidate.

36. The electronic device according to claim 35, wherein the recommendation model is obtained by training a first neural network by using a biased data set and an unbiased data set in a sample set in a first distillation manner, the biased data set comprises biased samples, the unbiased data set comprises unbiased samples, the first distillation manner is determined based on data features of the sample set, the samples in the biased data set comprise information about a first user, information about a first recommended object, and actual labels, actual labels of the samples in the unbiased data set are used to represent whether the first user performs an operational action on the first recommended object, the samples in the unbiased data set comprise information about a second user, information about a second recommended object, and actual labels, and the actual labels of the samples in the unbiased data set are used to represent whether the second user performs an operational action on the second recommended object.

37. A neural network distillation apparatus, comprising a processor, wherein the processor is coupled to a memory, the memory stores programs, and the program instructions stored in the memory are executed by the processor to implement the method according to any one of claims 1 to 12.

38. A recommendation apparatus, comprising at least one processor and a memory, wherein the at least one processor is coupled to the memory, and is configured to read and execute instructions in the memory, to perform the recommendation method according to any one of claims 13 to 15.

39. An electronic device, comprising a processor and a memory, wherein the memory stores one or more computer programs, the one or more computer programs comprise instructions, and when the instructions are executed by the one or more processors, the electronic device is enabled to perform the method according to any one of claims 16 to 18.

40. A computer-readable storage medium, comprising programs, wherein the programs are executed by a processing unit to perform the method according to any one of claims 1 to 12, claims 13 to 15, or claims 16 to 18.

FIG. 1

FIG. 2

Neural
network
layer
130

| Output layer |
| 140 |

| Hidden layer n |
| 13n |

| Hidden layer 2 |
| 132 |

| Hidden layer 1 |
| 131 |

Convolutional
layer/Pooling
layer
120

| 126 |
| 125 |
| 124 |
| 123 |
| 122 |
| 121 |

Convolutional
neural network
(CNN)
100

Input layer
110

| Input layer |
| 110 |

FIG. 3

| Output layer |
| 140 |

| Hidden layer n |
| 13n |

Neural network
layer
130

| Hidden layer 2 |
| 132 |

| Hidden layer 1 |
| 131 |

Convolutional
neural network
(CNN)
100

Convolutional
layer/Pooling
layer
120

| 126 | 126 | 126 |
| 125 | 125 | 125 |
| 124 | 124 | 124 |
| 123 | 123 | 123 |
| 122 | 122 | 122 |
| 121 | 121 | 121 |

Input layer
110

| Input layer |
| 110 |

FIG. 4

500

Data storage system 250

Execution device 210

...

Communications network

Local device 501

Local device 502

For example

FIG. 5

| | |
|---|---|
| Obtain a sample set, where the sample set includes a biased data set and an unbiased data set | 601 |

| | |
|---|---|
| Determine a first distillation manner based on data features of the sample set | 602 |

| | |
|---|---|
| Train a first neural network based on the biased data set and the unbiased data set in the first distillation manner, to obtain an updated first neural network | 603 |

FIG. 6

Click-through rate

Ranking

FIG. 7

808

First neural network

Unobserved data set

807

Knowledge distillation

801

Biased data set $S_c$

802

Select a distillation manner

Unbiased data set $S_t$

803

Sample distillation

804

Label distillation

805

Feature distillation

806

Model structure distillation

Distillation manners

FIG. 8

User

| Item 1 |
| Item 2 |
| Item 3 |
| ... |

Recommendation result

Prediction model

User feedback data → Log → Offline training

FIG. 9

FIG. 10

1100

| Obtain information about a target user and information about a recommended object candidate | — S1110 |

| Input the information about the target user and the information about the recommended object candidate into a recommendation model, and predict a probability that the target user performs an operational action on the recommended object candidate | — S1120 |

FIG. 11

App Marketplace

Featured Applications                                           More >

| App 1 | App 2 | App 3 | App 4 |
|-------|-------|-------|-------|
| Install | Install | Install | Install |

Featured Games

| App 5 | App 6 | App 7 | App 8 |
|-------|-------|-------|-------|
| Install | Install | Install | Install |

★
Recommendation        Application        Management        Me

FIG. 12

FIG. 13

Obtain interaction behavior data of a user

Event acquisition module

Service validation module

Information flow app

Video app    Reading app    Browser app    ...

User interaction behavior data

Content recall, accurate ranking, and content display

Big data platform module

Video | Reading | Browser | ...

Information flow recommendation engine

Data of a source domain and data of a target domain

Cross-domain learning module

Effect validation of cross-domain learning in an information flow

FIG. 14

EP 4 180 991 A1

FIG. 15

FIG. 16

FIG. 17(a)

FIG. 17(b)

10:30

**Cross-domain recommendation management of a browser app**

Cross-domain recommendation allowed ⬤

\#
A
Reading
Allowed ⬤ B
C
Music D
Allowed ⬤ E
F
Video
Allowed ⬤ G
H
I
News J
Allowed ⬤ K
L
Chat
Allowed ⬤ M
N
O
Shopping
Allowed ⬤ P
Q
R
S
T
U
V
W
X
Y
Z

FIG. 17(c)

FIG. 17(d)

FIG. 18(a)

Recommended to you

"XXX" ended with the tables turned

▷ Based on your data in a video app, the following is recommended to you:

Conference XXX is around the corner, and top papers cited in the past five years are explained in detail in this article

▷ Based on your data in a reading app, the following is recommended to you:

304

FIG. 18(b)

FIG. 19(a)

FIG. 19(b)

1200

Display a first interface, where the first interface may include a learning list of at least one application, a learning list of a first application in the learning list of the at least one application includes at least one option, and each option in the at least one option is associated with one application ⌐∿ S1210

Detect a first operation of a user in the first interface ⌐∿ S1220

Enable or disable, in response to the first operation, a cross-domain recommendation function of the first application in applications associated with some or all of the options in the learning list of the first application ⌐∿ S1230

FIG. 20

Neural network distillation apparatus

| Acquisition module | Decision module | Training module | Output module |
|---|---|---|---|
| 2101 | 2102 | 2103 | 2104 |

FIG. 21

Recommendation apparatus

| Obtaining unit | Processing unit |
|---|---|
| 2201 | 2202 |

FIG. 22

FIG. 23

FIG. 24

FIG. 25

2601　　　　　2602　　　　　2603

| Processor | | Memory | | | Transceiver | |

FIG. 26

Host CPU

Weight memory 2702

Input memory 2701

Operation circuit 2703

Vector calculation unit 2707

Accumulator 2708

Direct memory access controller 2705

Unified memory 2706

Controller 2704

Instruction fetch buffer 2709

External memory

Bus interface unit 2710

Neural network processor 270

FIG. 27

## INTERNATIONAL SEARCH REPORT

International application No.

**PCT/CN2020/104653**

| A. | CLASSIFICATION OF SUBJECT MATTER |
|---|---|

G06F 16/9535(2019.01)i; G06N 3/04(2006.01)i

According to International Patent Classification (IPC) or to both national classification and IPC

| B. | FIELDS SEARCHED |
|---|---|

Minimum documentation searched (classification system followed by classification symbols)

G06F,G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 无偏, 老师, 推荐模型, 推荐, 网络, 有偏, 跨域, 学生, 蒸馏, 控件, 阅读, 偏置, 训练集, 终端, 模型, 打开, 知识蒸馏, 应用程序, 置信度, 学习, 数据集, 点击, 标注, 标记, 知识, 学习样本, 界面, 样本, 历史, 关联, app, 应用, 选择, 训练, 用户, 类别, 不同种类, 视频, dataset, bias, distillation, teacher, model, knowledge

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111105008 A (FUJITSU LIMITED) 05 May 2020 (2020-05-05) description, paragraphs [0080]-[0100], and figure 4 | 1-40 |
| A | CN 111310053 A (SHANGHAI XIMALAYA TECHNOLOGY CO., LTD.) 19 June 2020 (2020-06-19) description, paragraphs [0023]-[0035] | 1-40 |
| A | CN 110351318 A (TENCENT TECHNOLOGY SHENZHEN CO., LTD.) 18 October 2019 (2019-10-18) description, paragraphs [0140]-[0169] | 1-40 |
| A | US 10713540 B2 (ZHANG, Mi et al.) 14 July 2020 (2020-07-14) entire document | 1-40 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2021** | **28 April 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/104653**

| Patent document cited in search report | | | Publication date (day/month/year) | Patent family member(s) | | | Publication date (day/month/year) |
|---|---|---|---|---|---|---|---|
| CN | 111105008 | A | 05 May 2020 | EP | 3648014 | A1 | 06 May 2020 |
| | | | | JP | 2020071883 | A | 07 May 2020 |
| | | | | US | 2020134506 | A1 | 30 April 2020 |
| CN | 111310053 | A | 19 June 2020 | None | | | |
| CN | 110351318 | A | 18 October 2019 | None | | | |
| US | 10713540 | B2 | 14 July 2020 | None | | | |

Form PCT/ISA/210 (patent family annex) (January 2015)